(19) **Europäisches Patentamt / European Patent Office / Office européen des brevets**

(11) **EP 3 507 741 B1**

(12) **FASCICULE DE BREVET EUROPEEN**

(45) Date de publication et mention
de la délivrance du brevet:
**01.07.2026 Bulletin 2026/27**

(21) Numéro de dépôt: **17771804.6**

(22) Date de dépôt: **30.08.2017**

(51) Classification Internationale des Brevets (IPC):
**G06V 20/80** *(2022.01)* **G06V 10/75** *(2022.01)*

(52) Classification Coopérative des Brevets (CPC):
**G06V 20/80; G06V 10/751**

(86) Numéro de dépôt international:
**PCT/FR2017/052307**

(87) Numéro de publication internationale:
**WO 2018/042127 (08.03.2018 Gazette 2018/10)**

(54) **PROCÉDÉ ET SYSTÈME DE GÉNÉRATION DE LA SIGNATURE D'UNE SURFACE**

VERFAHREN UND SYSTEM ZUR ERZEUGUNG EINER OBERFLÄCHENSIGNATUR

METHOD AND SYSTEM FOR GENERATING A SURFACE SIGNATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.09.2016 FR 1658121**

(43) Date de publication de la demande:
**10.07.2019 Bulletin 2019/28**

(73) Titulaire: **EDGYN
75014 Paris (FR)**

(72) Inventeurs:
• **CUGNET, Fanny
73000 Chambery (FR)**
• **GLASSON, Hubert
33185 Le Haillan (FR)**
• **GUIOT DU DOIGNON, Hervé
73290 La Motte Servolex (FR)**

(74) Mandataire: **Cabinet Beau de Loménie
103, rue de Grenelle
75340 Paris Cedex 07 (FR)**

(56) Documents cités:
• ZHAO QIUSHI ET AL: "Sift-based image alignment for contactless palmprint verification", 2013 INTERNATIONAL CONFERENCE ON BIOMETRICS (ICB), IEEE, 4 June 2013 (2013-06-04), pages 1 - 6, XP032491281, [retrieved on 20130926], DOI: 10.1109/ICB.2013.6612989
• ANTHONY T.S. HO: "Handbook of Digital Forensics of Multimedia Data and Devices", 1 January 2015, WILEY, pages: 450 - 455, XP055363323
• METOIS E ET AL: "FiberFingerprint Identification", PROCEEDINGS OF THE WORKSHOP ON AUTOMATIC IDENTIFICATION, XX, XX, 1 March 2000 (2000-03-01), pages 147 - 154, XP003017453
• CLARKSON W ET AL: "Fingerprinting Blank Paper using Commodity Scanners", SECURITY AND PRIVACY, 2009 30TH IEEE SYMPOSIUM ON, IEEE, PISCATAWAY, NJ, USA, 17 May 2009 (2009-05-17), pages 301 - 314, XP031515112, ISBN: 978-0-7695-3633-0
• ASHLESH SHARMA ET AL: "PaperSpeckle: Microscopic Fingerprinting on Paper", COMPUTER AND COMMUNICATIONS SECURITY, ACM, 2 PENN PLAZA, SUITE 701 NEW YORK NY 10121-0701 USA, 17 October 2011 (2011-10-17), pages 99 - 110, XP058006044, ISBN: 978-1-4503-0948-6, DOI: 10.1145/2046707.2046721

**(Cont. page suivante)**

- **BUCHANAN J D R ET AL: "'Fingerprinting' documents and packaging", NATURE, NATURE PUBLISHING GROUP, UNITED KINGDOM, vol. 436, 28 July 2005 (2005-07-28), pages 475, XP002405507, ISSN: 0028-0836, DOI: 10.1038/436475A**

- **WILLIAM B. CLARKSON: "Breaking Assumptions: Distinguishing between Seemingly Identical Items using Cheap Sensors", 1 June 2012, PRINCETON UNIVERSITY, ISBN: 978-1-267-54493-3, pages: 1 - 160, XP055432262**

**Description**

La présente invention se situe dans le domaine général de la génération d'une signature numérique d'une surface d'un élément matériel, par exemple en vue d'authentifier cette surface ou cet élément matériel.

Une signature numérique d'une surface correspond à un code (par exemple une succession de chiffres et de lettres) généré, à l'aide d'un algorithme, à partir des caractéristiques structurelles de cette surface.

L'invention concerne plus particulièrement la correction de perspective entre une image représentant une surface d'un élément matériel et une image modèle d'une surface de référence, dans le but d'extraire la signature numérique de cet élément matériel.

Actuellement, il est possible d'extraire d'une surface une signature numérique à partir des caractéristiques structurelles de cette surface. Ces caractéristiques structurelles sont par exemple déterminées par détection, dans une image de cette surface, de l'interaction de cette surface avec une source de lumière. Un tel procédé est par exemple décrit dans le document EP1716520.

Par ailleurs, la technologie décrite dans le document EP2084886B1 propose d'associer un système mobile comportant un capteur, par exemple un téléphone intelligent (« Smartphone » en anglais) comportant une caméra, avec un module optique, par exemple intégré dans une coque du téléphone.

Cette technologie permet d'acquérir une image contrôlée d'une surface (la surface est positionnée d'une certaine façon dans l'image) et d'extraire, à partir de cette image, la signature numérique de cette surface.

L'image de la surface est acquise en positionnant l'ensemble composé du téléphone et de la coque au contact de cette surface, de manière à contrôler la distance optique entre la surface et le capteur de la caméra.

Lors de l'acquisition, la surface est éclairée avec une source de lumière, préférablement inclinée par rapport à la normale à cette surface.

Finalement, les caractéristiques structurelles sont obtenues en détectant l'interaction de la surface avec la source de lumière dans l'image acquise.

Un inconvénient de ce système est qu'il nécessite d'utiliser un module optique pour contrôler la distance entre la surface et le capteur qui acquiert l'image, pour que cette surface soit positionnée dans l'image d'une façon prédéterminée.

L'invention vise une solution ne présentant pas cet inconvénient, et permettant d'extraire la signature numérique d'une surface à partir d'une image de cette surface, cette dernière étant positionnée et inclinée de manière quelconque par rapport à une plan d'acquisition de l'image.

Zhao, "Sift-based image alignment for contactless palmprint verification", Int. Conf. on Biometrics IEEE, 2017, p. 1-6, expose une technique de génération de signature numérique d'une surface par le moyen de recalage de régions d'intérêt de manière efficace, mais cette technique est spécifique pour les surfaces palmaires.

Clarkson, " Breaking Assumptions: Distinguishing between Seemingly Identical Items using Cheap Sensors", these de doctorat de l'université de Princeton, 2012, expose une technique de génération de signature numérique de surface par le moyen de recalage de régions d'intérêt. Cette technique a le défaut qu'elle nécessite de faire les calculs de recalage à partir de tous les points des zones d'intérêt, ce qui n'est pas efficace. L'invention vise une solution ne présentant pas cet ces inconvénients.

OBJET ET RESUME DE L'INVENTION

L'invention consiste en un procédé selon la revendication 1 et un système selon la revendication 29.

Ainsi et selon un premier aspect, l'invention vise un procédé de génération d'une signature numérique d'une surface d'un élément matériel en matériau fibreux, en cuir ou métallique, dite « surface examinée », le procédé étant mis en œuvre par un système de traitement de données, tel que défini à la revendication 29.

Au sens de l'invention, une surface correspond à une partie (i.e. une zone délimitée) apparente d'un élément matériel (i.e. d'un objet). Cet élément matériel/objet peut par exemple consister en un produit, par exemple destiné à la vente, ou en son emballage. Il peut également correspondre à un document de sécurité, par exemple un document d'identité, un passeport, un billet de banque, etc.

La surface dite « examinée » correspond à une surface d'un élément matériel/objet. Elle correspond à la surface utilisée au sein du procédé et donc à la surface visible dans l'image décalée. Elle peut donc être comprise au sein d'une surface plus large de l'élément matériel.

La surface dite « de référence » correspond à une surface d'un élément matériel/objet prédéterminé. Par exemple, la surface de référence correspond à une surface dont on dont on a extrait la signature numérique et qui été enregistrée.

La signature numérique d'une surface correspond à un code (par exemple une succession de chiffres et de lettres) généré, à l'aide d'un algorithme, à partir des caractéristiques structurelles de cette surface.

La signature numérique d'une surface rend compte de (i.e. caractérise) la structure de cette surface. Elle peut donc caractériser la géométrie de la surface, sa morphologie interne et/ou externe, sa composition chimique, physicochimique, sa couleur, ou même l'évolution d'une combinaison quelconque de ces caractéristiques en fonction de leurs localisations spatiales sur la surface.

Par la suite, l'expression « signature numérique » pourra être remplacée de manière équivalente par le terme « signature ».

La signature numérique peut être qualifiée de « générée » par le procédé, ou alternativement d' « extraite » grâce au procédé.

Au sein du procédé, une image dite « décalée » de la surface examinée est d'abord obtenue. Une partie de cette image peut représenter la surface examinée. En alternative, l'ensemble de l'image représente la surface examinée.

L'image est dite décalée en ce qu'il est préférable de la recaler avant de pouvoir générer/extraire la signature de la surface qu'elle représente.

Une image décalée représentant une surface peut par exemple correspondre à une image d'une surface plane, cette surface plane étant comprise dans un plan incliné par rapport au plan d'acquisition de l'image. Par exemple, si l'image d'une surface plane est acquise avec un capteur, elle est dite décalée si l'axe optique de ce capteur forme un angle non nul avec la normale à cette surface.

Une fois l'image décalée obtenue, plusieurs zones d'intérêt sont obtenues dans cette image. Une zone d'intérêt d'une image peut comprendre à un ensemble de points voisins voire adjacents dans cette image. Par exemple, une zone d'intérêt peut comprendre l'ensemble des points formant un quadrilatère particulier dans l'image, ou un ensemble de points compris dans un tel quadrilatère.

Ces zones d'intérêt sont obtenues à partir de zones dites équivalentes prédéterminées au sein d'une image dite modèle représentant la surface dite de référence.

Chaque zone d'intérêt est obtenue par une méthode de mise en correspondance d'une zone équivalente avec l'image décalée. Une mise en correspondance correspond en anglais à de l'« Image Matching » ou « Template matching », et peut être réalisée par différentes méthodes d'analyse d'images, par exemple par une méthode des moindres carrés ou par une méthode d'intercorrelation. La mise en correspondance d'une zone équivalente avec l'image décalée permet de manière générale de déterminer dans l'image décalée une zone présentant des caractéristiques similaires ou proches de la zone équivalente. Typiquement, une zone d'intérêt et sa zone équivalente peuvent représenter le même objet ou la même partie d'un objet sur deux images acquises avec des angles de prise de vue différents.

A partir des zones d'intérêt de l'image décalée et des zones équivalentes de l'image modèle, une première homographie permettant de recaler l'image obtenue sur l'image modèle est estimée.

Ce recalage correspond à une correction de la perspective entre ces deux images, et permet de simuler le fait de replacer la surface examinée de l'image décalée dans le même plan et avec la même orientation que le plan dans lequel se trouve la surface de référence de l'image modèle.

En appliquant cette première homographie à l'image décalée, une image dite « recalée » de la surface examinée est obtenue, à partir de laquelle la signature de cette surface peut être extraite.

Avantageusement, il est possible, à partir d'une image représentant une surface inclinée et positionnée de manière quelconque, de générer la signature de cette surface, en simulant l'orientation de cette surface dans un plan adéquat.

Dans un mode particulier de réalisation, l'étape d'obtention de l'image décalée comporte une étape d'acquisition d'une image dite « acquise », l'image décalée étant obtenue à partir de l'image acquise.

Cette image acquise représente également tout ou partie de la surface examinée.

Dans un mode particulier de réalisation, appelé par la suite premier mode général de réalisation, l'image décalée correspond à l'image acquise et la signature est générée dans l'étape de génération par analyse de l'image recalée.

Avantageusement, le recalage de l'image décalée, correspondant à l'image acquise, est effectué par un traitement d'image (correction de la perspective en appliquant une homographie), et ne nécessite donc pas d'utiliser un système optique particulier en association avec un module d'acquisition acquérant l'image dite « acquise » (premier module d'acquisition au sens de l'invention) pour que le plan de la surface examinée soit calé sur un plan souhaité, dans le but d'en extraire la signature. L'image de la surface examinée peut donc être acquise avec le premier module d'acquisition positionné à une distance quelconque et avec une orientation quelconque par rapport à la surface examinée.

Dans un mode particulier de réalisation, le procédé comporte une étape préalable de définition des zones équivalentes dans l'image modèle.

Dans un mode particulier de réalisation, appelé par la suite deuxième mode général de réalisation, le procédé comporte une étape préalable d'acquisition d'une image dite « orientée » de la surface de référence avec un deuxième module d'acquisition positionné sensiblement selon la normale à la surface de référence, dans lequel l'image modèle est obtenue en appliquant une deuxième homographie prédéterminée à l'image orientée.

Dans ce mode de réalisation, une image dite « orientée » est acquise avec un deuxième module d'acquisition dont l'axe optique est positionné sensiblement selon la normale à la surface de référence.

Typiquement, sur une ligne de production, une acquisition sensiblement selon la normale aux surfaces de produits ou d'emballages de produits est utilisée de manière répétée.

EP 3 507 741 B1

L'image orientée est alors transformée pour simuler l'acquisition d'une image de la surface de référence dans des conditions différentes de l'acquisition de l'image orientée, par exemple avec un angle différent, dans une orientation différente et/ou à une distance différente.

Cette transformation correspond à l'application d'une deuxième homographie à l'image orientée. L'image modèle est ainsi obtenue, par rapport à laquelle l'image décalée sera recalée.

Avantageusement, l'application de cette deuxième homographie peut permettre d'obtenir une image modèle dans laquelle la surface de référence présente une inclinaison et une position approchées de celles de la surface examinée dans l'image décalée.

Cette étape permet alors d'optimiser l'étape de recalage de l'image décalée avec l'image modèle, par exemple en permettant d'obtenir une meilleure estimation de la première homographie, ou encore en évitant d'obtenir une estimation aberrante de cette homographie.

Par exemple, l'image orientée de la surface de référence acquise sur une ligne de production peut être transformée de manière à simuler l'acquisition d'une image de cette surface de référence avec un système mobile comme un téléphone ou une tablette. Ainsi, si l'image décalée est également acquise avec ce système mobile, et donc dans des conditions d'orientation et de position de la surface examinée similaires ou proches de celles de l'image modèle obtenue après transformation, le recalage ou la correction de perspective entre cette image décalée et cette image modèle sera améliorée.

Dans un mode particulier de réalisation du deuxième mode général de réalisation (dans lequel l'image modèle est obtenue par application de la deuxième homographie à une image orientée), l'étape de génération de la signature numérique comporte une étape d'obtention d'une image dite « transformée » par transformation de l'image recalée en lui appliquant l'inverse de la deuxième homographie, et la signature est générée dans l'étape de génération par analyse de l'image transformée.

Dans ce mode de réalisation, l'image modèle est obtenue en appliquant la deuxième homographie à l'image orientée, puis l'image décalée est recalée avec l'image modèle pour obtenir l'image recalée. Enfin, l'inverse de cette deuxième homographie est appliquée à l'image recalée pour obtenir l'image transformée. L'image transformée est ainsi recalée avec l'image orientée.

On extrait donc la signature de la surface examinée, à partir de l'image transformée, dans des conditions de position et d'orientation de cette surface similaires à celles dans laquelle est positionnée la surface de référence dans l'image orientée.

Dans ce mode de réalisation, le recalage de l'image décalée (la correction de la perspective) est effectué avant d'appliquer l'inverse de la deuxième homographie pour recaler l'image recalée avec l'image orientée.

En alternative, toujours dans le cadre du deuxième mode général de réalisation, l'image récalée est obtenue par application de l'homographie inverse de la deuxième homographie à l'image acquise, et la signature est générée dans l'étape de génération par analyse de l'image recalée.

Dans ce mode de réalisation, la deuxième homographie est également appliquée à l'image orientée, permettant d'obtenir l'image modèle, mais l'inverse de cette deuxième homographie est d'abord appliquée à l'image acquise, pour obtenir l'image décalée, qui est ensuite recalée avec l'image modèle pour obtenir l'image recalée.

On extrait donc ici la signature de la surface examinée à partir de l'image recalée, mais également dans des conditions de position et d'orientation de cette surface similaires à celles dans laquelle est positionnée la surface de référence dans l'image orientée.

Dans ce mode de réalisation, l'inverse de la deuxième homographie est appliquée à l'image acquise, avant le recalage de cette image (correction de la perspective) avec l'image modèle.

Dans un mode particulier de réalisation, le procédé comporte une étape d'authentification de la surface examinée, cette authentification étant effectuée par comparaison de la signature générée avec une signature numérique authentique, la signature authentique caractérisant la structure de la surface de référence.

Cette authentification peut correspondre à une méthode telle que décrite dans le document EP1747540B1 ou le document EP1971960B1.

En comparant la signature générée avec une signature authentique, il est possible de déterminer si la surface examinée et la surface de référence présentent les mêmes caractéristiques structurelles.

De cette manière, il est par exemple possible d'évaluer si un produit particulier comportant la surface examinée est issu d'une ligne de production dans laquelle une signature authentique a préalablement été extraite d'une ou de plusieurs surfaces comprises dans un ou plusieurs produits.

Dans un mode particulier de réalisation, le procédé comporte :

- dans le premier mode général de réalisation, une étape préalable de génération de la signature authentique à partir de l'image modèle, dite génération de premier type ; ou

- dans le deuxième mode général de réalisation, une étape préalable de génération de la signature authentique à partir de l'image orientée, dite génération de second type.

Ici, dans le cas du premier mode général de réalisation, la signature de la surface examinée est générée à partir de l'image recalée et est comparée aux signatures de surfaces de références extraites à partir des images des produits enregistrés.

Dans le cas du deuxième mode général de réalisation, la signature de la surface examinée est générée à partir de l'image transformée, ou de l'image recalée si l'image décalée est obtenue par application de l'inverse de la deuxième homographie à l'image acquise, et est comparée aux signatures des surfaces de références extraites à partir des images orientée des produits enregistrés.

Dans ces deux cas, les signatures sont extraites d'images représentant des surfaces positionnées dans le même plan et avec la même orientation, garantissant la validité de l'étape d'authentification.

Dans un mode particulier de réalisation, l'étape de génération de la signature authentique comporte :

- une étape d'acquisition par un troisième module d'acquisition de la surface de référence ; et
- une étape d'éclairage pendant au moins l'étape d'acquisition de la surface de référence avec une première source de lumière,

cette étape d'acquisition correspondant à :

- une acquisition de l'image modèle si la génération est du premier type ; ou à
- une acquisition de l'image orientée si la génération est du second type.

Si la génération est du second type, alors le troisième module d'acquisition correspond au deuxième module d'acquisition.

Si un éclairage n'est pas suffisant en terme de surface éclairée pour la surface examinée, il est prévue d'augmenter la surface effective de la surface examinée et/ou de la zone d'intérêt en réalisant plusieurs étapes d'obtention d'images dites « décalées ». Les différentes étapes d'obtention d'images décalées sont alors effectuées avec un déplacement (par exemple une translation) du module d'acquisition et de la source d'éclairage de sorte à reconstituer une surface examinée et/ou de la zone d'intérêt dont la surface est plus importante.

Dans un mode particulier de réalisation, l'axe optique du troisième module est orienté sensiblement selon la normale à la surface de référence, et la surface de référence est éclairée lors de l'étape d'éclairage par la première source avec un angle d'attaque par rapport à la surface de référence correspondant à une incidence rasante.

Dans un mode particulier de réalisation, cet angle d'attaque est de préférence compris entre 16° et 45°.

Dans un mode particulier de réalisation, le procédé comporte une étape d'éclairage, au moins pendant l'étape d'acquisition effectuée par le premier module, de la surface examinée par une deuxième source de lumière, et l'étape de génération de la signature comporte une étape d'obtention d'une caractéristique structurelle de la surface examinée par détection de l'interaction de la surface examinée avec la deuxième source de lumière, cette détection de l'interaction étant effectuée :

- en analysant l'image recalée si la génération est du premier type ; ou
- en analysant l'image transformée obtenue à partir de l'image recalée, si la génération est du second type.

Dans un mode particulier de réalisation, le procédé comporte une étape préalable de génération de la signature authentique, dite génération de troisième type, cette étape de génération de troisième type comportant :

- une étape d'acquisition par un module d'acquisition de l'image modèle;
- une étape d'éclairage pendant l'étape d'acquisition de la surface de référence avec une source de lumière, l'axe optique du module et la source ayant sensiblement une même orientation par rapport à la surface de référence, par exemple un même angle d'inclinaison $\beta$; et
- une étape d'analyse d'une image dite « réorientée », cette image réorientée étant obtenue par application d'une homographie compensant l'orientation du module d'acquisition et de la source de lumière, par exemple une première rotation d'un angle $-\beta$ à l'image modèle;

dans lequel l'image décalée correspond à l'image acquise,
le procédé comportant une étape d'éclairage, au moins pendant l'étape d'acquisition effectuée par le premier module, de la surface examinée par une source de lumière, et dans lequel l'étape de génération de la signature comporte une étape d'obtention d'une caractéristique structurelle de la surface examinée par détection de l'interaction de la surface examinée avec la source de lumière, l'axe optique du module et la source étant orientés sensiblement ayant sensiblement une même orientation par rapport à ladite surface examinée, par exemple un même angle d'inclinaison β,

la détection de l'interaction étant effectuée par analyse d'une image dite « image remise à plat », cette image remise à plat étant obtenue d'une homographie compensant l'orientation du module d'acquisition et de la source de lumière, par exemple une première rotation d'un angle -βà l'image recalée.

Dans ce mode de réalisation, une image de la surface de référence est acquise avec un module d'acquisition et une source de lumière orientées par exemple selon un angle β par rapport à la surface référence. L'image modèle est alors obtenue.

Puis selon cet exemple une rotation d'un angle - β de l'image modèle est effectuée, de manière à obtenir une image réorientée apparaissant comme ayant été acquise avec un module d'acquisition positionné à 90° avec la surface de référence.

Puis la signature de la surface de référence est extraite à partir de cette image réorientée. Cette signature est qualifiée de signature authentique.

Une image de la surface examinée est alors acquise avec un module d'acquisition et une source de lumière orientés selon un angle sensiblement égale à β par rapport à la surface examinée. L'image acquise est alors obtenue.

Cette image acquise correspond à l'image décalée, et est ensuite recalée avec l'image modèle, de manière à obtenir l'image recalée.

Puis une rotation d'un angle - β de l'image recalée est effectuée, de manière à obtenir une image remise à plat apparaissant comme ayant été acquise avec un module d'acquisition positionné à 90° avec la surface examinée.

Enfin, la signature numérique de la surface de référence est extraite à partir de cette image remise à plat.

Dans un mode particulier de réalisation, pour l'acquisition d'au moins deux images par le premier module, pour chacune de ces images acquises, la deuxième source est localisée à une même position relative et selon une même orientation relative par rapport au premier module.

Dans ce mode de réalisation, le procédé peut être appliqué de manière répété pour différentes surfaces examinées avec un même système mobile comportant un premier module d'acquisition et une deuxième source de lumière dont les positions et les orientations sont fixes sur ce système.

Par exemple, le procédé peut être mis en œuvre dans un téléphone ou une tablette, comportant par exemple une caméra faisant office de premier module d'acquisition, et un flash faisant office de deuxième source de lumière.

Dans ce mode de réalisation, la répétabilité du procédé avec un même système mobile est facilitée.

Dans un mode particulier de réalisation, le procédé comporte une étape de lecture d'informations protégées, ces informations protégées étant soumises sous forme numérique à un traitement numérique inverse d'un traitement utilisé pour leur protection, le traitement utilisant la signature générée.

Dans ce mode de réalisation, la signature générée est nécessaire pour pouvoir lire les informations protégées, et est donc utilisée comme une clé de protection de ces informations comme décrit dans le document EP1716520B1.

Dans un mode particulier de réalisation, les informations protégées sont contenues dans un code visuel disposé sur la surface examinée ou sur un produit ou un emballage comprenant la surface examinée.

Dans un mode particulier de réalisation, le code visuel correspond à un code-barres en une dimension ou en deux dimensions.

Ces informations protégées peuvent donc être contenues dans le code-barres en une ou deux dimensions lu par un capteur, et l'utilisation de la signature générée pour lire ces informations garantit leur protection.

Dans un mode particulier de réalisation, le procédé comporte une étape de définition d'une zone dite « de recherche » dans l'image décalée, cette zone de recherche comportant les zones d'intérêt et la méthode de mise en correspondance étant effectuée à partir de cette zone de recherche.

Une zone de recherche peut par exemple être estimée comme étant :

- localisée dans l'image décalée à une position proche de celle de la zone équivalente dans l'image modèle ; et
- de taille plus importante dans l'image décalée que les zones d'intérêts.

Cette zone de recherche correspond à une zone dans laquelle les zones d'intérêt vont être localisées par la méthode de mise en correspondance. Elle permet de définir un périmètre particulier dans l'image décalée, dans lequel les zones d'intérêt ont une probabilité plus élevée de se trouver, pour effectuer plus efficacement la méthode de mise en correspondance.

Dans un mode particulier de réalisation, la méthode de mise en correspondance permet d'obtenir, à partir de la zone de recherche, une première estimation des paramètres d'une application affine transformant des points prédéterminés des zones d'intérêt en des points prédéterminés correspondants des zones équivalentes.

Dans un mode particulier de réalisation, la première estimation est obtenue en utilisant une méthode des moindres carrés entre les coordonnées des points des zones équivalentes et les coordonnées des points de la zone de recherche.

En alternative, la première estimation est obtenue en utilisant une méthode d'intercorrélation entre les coordonnées des points des zones équivalentes et les coordonnées des points de la zone de recherche.

Ces deux méthodes correspondent à des méthodes largement connues de «Template matching », et pourrait être remplacées par d'autres méthodes analogues.

Dans un mode particulier de réalisation, la méthode de mise en correspondance comporte une étape d'obtention d'une deuxième estimation des paramètres, cette deuxième estimation étant obtenue par optimisation de la première estimation avec un algorithme itératif visant à maximiser un premier coefficient de corrélation amélioré entre la zone équivalente et la zone de recherche.

Cette optimisation correspond à la méthode décrite dans le document « Parametric Image Alignment Using Enhanced Correlation Coefficient Maximization » (Georgios D. Evangelidis and Emmanouil Z. Psarakis) publiée en octobre 2008 dans le journal « IEEE Transactions on patterne analysis and machine intelligence », Vol. 30, NO. 10.

Elle permet d'obtenir une estimation plus précise de l'homographie permettant de recaler l'image décalée avec l'image modèle. En particulier, elle permet de corriger d'éventuels effets de distorsion de l'image survenant lors du recalage.

Dans un mode particulier de réalisation, la surface de référence constitue une surface dont l'inclinaison et la position par rapport au plan d'acquisition de ladite image modèle sont connues.

Dans un mode particulier de réalisation, l'obtention de la première homographie comporte l'utilisation d'un algorithme dit « RANSAC » (RAndom SAmple Consensus). Cet algorithme est par exemple décrit dans le document « M.A. Fischler and R.C. Bolles. Random sample consensus: A paradigm for model fitting with applications to image analysis and automated cartography. Communications of the ACM, 24(6), 381-395, 1981 ».

Cet algorithme permet d'exclure les points aberrants de l'ensemble de points utilisé dans le procédé pour estimer les paramètres de cette première homographie.

Une meilleure estimation des paramètres de la première homographie est ainsi obtenue.

Dans un mode particulier de réalisation, l'obtention de la première homographie comporte l'utilisation d'un algorithme itératif d'optimisation visant à maximiser un deuxième coefficient de corrélation amélioré entre l'image décalée et l'image modèle.

Cet algorithme utilisant ce deuxième coefficient de corrélation amélioré est analogue à celui utilisant le premier coefficient tel que décrit précédemment, mais s'applique maintenant dans le cadre du recalage de l'image décalée avec l'image modèle, et non plus lors de la mise en correspondance d'une zone d'intérêt avec une zone équivalente.

Il permet d'obtenir une estimation améliorée des paramètres de la première homographie.

Conformément à l'invention, la première homographie est estimée à partir de coordonnées de couples de points, chaque couple de points comportant un point prédéterminé d'une zone d'intérêt et un point correspondant de ladite zone équivalente.

Dans un mode particulier de réalisation, ces points comportent les centres des zones d'intérêt et des zones équivalentes.

Dans ce mode de réalisation, la détermination de la première homographie est donc effectuée à partir d'un ensemble de couples de points, chaque couple comportant le centre d'une zone d'intérêt et le centre de la zone équivalente déterminée par une mise en correspondance de cette zone d'intérêt avec l'image modèle.

Par exemple, une méthode possible pour déterminer cette homographie pourrait être celle utilisée dans la partie 4.2 du document « Image Registration For Perspective Deformation Recovery » (Geaorge Wolberg et Siavash Zokai).

Conformément à l'invention, chaquezone d'intérêt est positionnée autour et/ou par rapport à un élément graphique présents sur la surface examinée, cet élément graphique étant également présent sur la surface de référence.

La présence d'éléments graphiques permet de faciliter d'une part la définition des zones d'intérêt, en utilisant par exemple une méthode de reconnaissance de ces éléments graphiques pour définir ces zones, et permet d'autre part de faciliter l'étape de recalage de l'image décalée avec l'image modèle. En effet, il est préférable pour appliquer une méthode de mise en correspondance ou méthode d' « Image Matching » d'utiliser comme entrée des images présentant des variations rapides (de l'ordre de la dizaine de pixels par exemple) de teintes et/ou d'intensité.

Préférablement, ces éléments graphiques apparaissent de manière contrastée sur la surface examinée et sur la surface de référence, facilitant encore davantage la méthode de mise en correspondance.

Dans un mode particulier de réalisation, le procédé selon l'invention comporte une étape préalable de définition des zones équivalentes dans l'image modèle.

Dans un mode particulier de réalisation, la surface examinée comporte un symbole, l'étape d'acquisition de l'image acquise étant déclenchée automatiquement en fonction de la détermination d'une orientation dudit premier module d'acquisition par rapport à la surface examinée, ladite détermination étant effectuée à partir d'une image dudit symbole.

Préférablement, le procédé comportant une étape d'affichage, sur un écran d'un terminal comportant ledit premier module d'acquisition, d'une image du champ d'acquisition dudit premier module, dans laquelle est superposé un symbole virtuel, et dans lequel l'étape d'acquisition de l'image acquise est déclenchée automatiquement en fonction de la position relative de l'image dudit symbole dans ledit champ d'acquisition et de la position dudit symbole virtuel.

Encore préférablement, l'étape d'acquisition de l'image acquise est déclenchée automatiquement lorsque l'image dudit symbole dans ledit champ d'acquisition coïncide avec ledit symbole virtuel.

Avantageusement, dans ce mode de réalisation, superposer ces deux symboles impose d'orienter le deuxième ou troisième module d'acquisition d'une certaine manière et l'orientation de ce module d'acquisition est donc contrôlée.

Par exemple, ce symbole peut être choisi tel que l'axe optique du module d'acquisition doive être orienté à 45° ou à 90° par rapport à la surface examinée. Selon un second aspect, l'invention vise un système de génération d'une signature numérique d'une surface d'un élément matériel en matériau fibreux, en cuir ou métallique, dite « surface examinée » » défini à la revendication 30.

Dans un mode particulier de réalisation, le système comporte :

- un premier module comportant une première caméra et une première source lumineuse formant un angle d'attaque par rapport à la surface de référence correspondant à une incidence rasante, cet angle d'attaque étant de préférence compris entre 16° et 45°, encore de préférence compris entre 16° et 25°, encore de préférence compris entre 16° et 20° ; et/ou
- un deuxième module comportant un terminal communicant, une deuxième caméra et une deuxième source lumineuse.

Dans un mode particulier de réalisation, le terminal communicant est un téléphone portable ou une tablette, la deuxième caméra est une caméra de ce téléphone portable ou de cette tablette, et dans la deuxième source lumineuse est un flash de ce téléphone portable ou de cette tablette.

Dans un mode particulier de réalisation, les différentes étapes du procédé de génération d'une signature numérique d'une surface examinée sont déterminées par des instructions de programmes d'ordinateurs.

En conséquence, l'invention vise aussi un programme d'ordinateur sur un support d'informations, ce programme étant susceptible d'être mis en œuvre par un ordinateur, ce programme comportant des instructions adaptées à la mise en œuvre du procédé de génération d'une signature d'une surface examinée telle que mentionnée ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou système capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

BREVE DESCRIPTION DES FIGURES

D'autres caractéristiques et avantages de l'invention apparaîtront à la lecture de la description qui suit, faite en référence aux dessins annexés dans lesquels :

- la figure 1 représente un système de génération d'une signature numérique d'une surface examinée conforme à l'invention ;
- la figure 2 représente un terminal compris dans un système de génération d'une signature numérique d'surface examinée conforme à l'invention ;
- les figures 3 et 4 représentent des systèmes de génération d'une signature numérique d'une surface examinée conformes à l'invention ;
- les figures 5 à 14 représentent des étapes d'un procédé de génération d'une signature numérique d'une surface examinée conforme à un premier mode général de réalisation de l'invention ;
- la figure 15 représente un exemple d'une image dite « décalée » d'une surface de référence conforme à l'invention ;
- la figure 16 représente un exemple d'une image dite « recalée » d'une surface de référence conforme à l'invention ;
- la figure 17 représente un schéma résumant les différentes transformations appliquées aux images mises en jeu dans le premier mode général de réalisation ;

- les figures 18 et 19 représentent des étapes d'un procédé de génération d'une signature numérique d'une surface examinée conforme à un deuxième mode général de réalisation de l'invention ;
- les figures 20 et 21 représentent des schémas résumant deux variantes des différentes transformations appliquées aux images mises en jeu dans le deuxième mode général de réalisation ;
- les figures 22 à 24 représentent des systèmes de génération d'une signature numérique d'une surface examinée conformes à l'invention ;
- la figure 25 représente un terminal compris dans un système de génération d'une signature numérique d'surface examinée conforme à l'invention ;
- et la figure 26 représente des étapes d'un procédé de génération d'une signature numérique d'une surface examinée conforme à un quatrième mode de réalisation de l'invention.

DESCRIPTION DETAILLEE

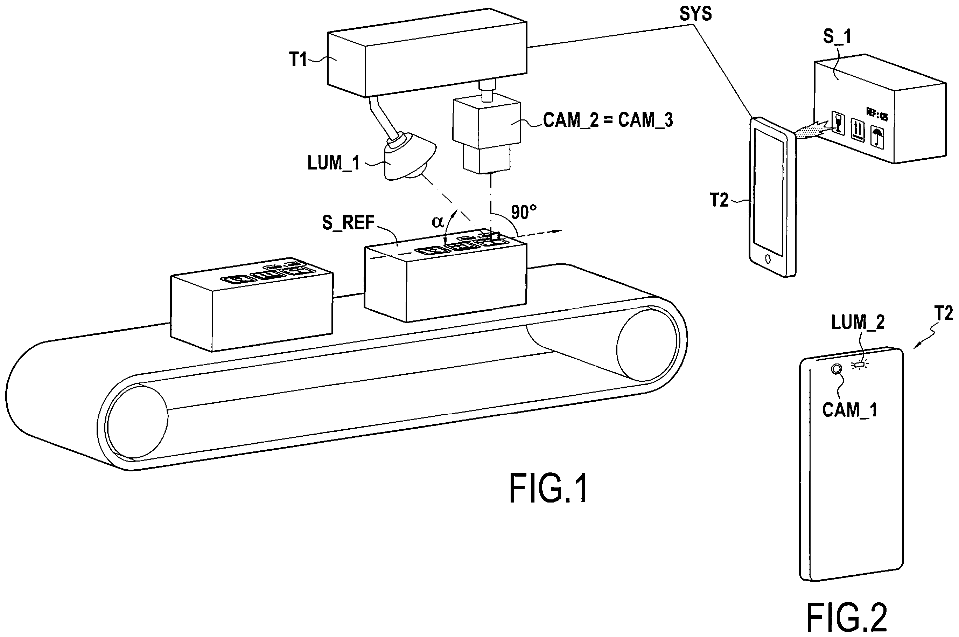

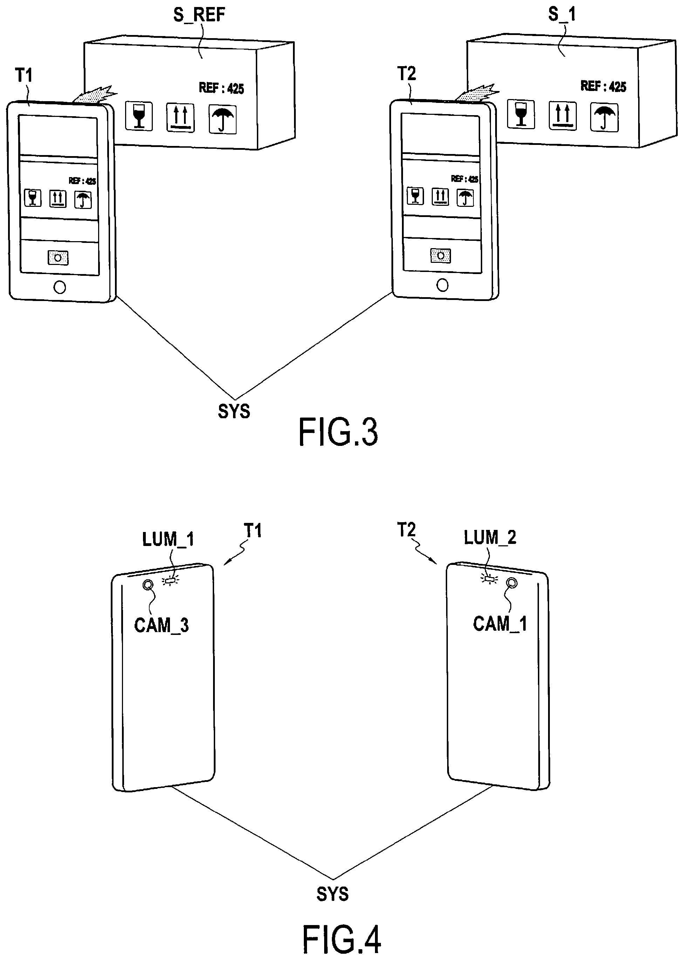

La **figure 1,** la **figure 3** et la **figure 4** illustrent un système SYS de génération d'une signature numérique d'une surface examinée S_1, le système SYS étant conforme à l'invention.

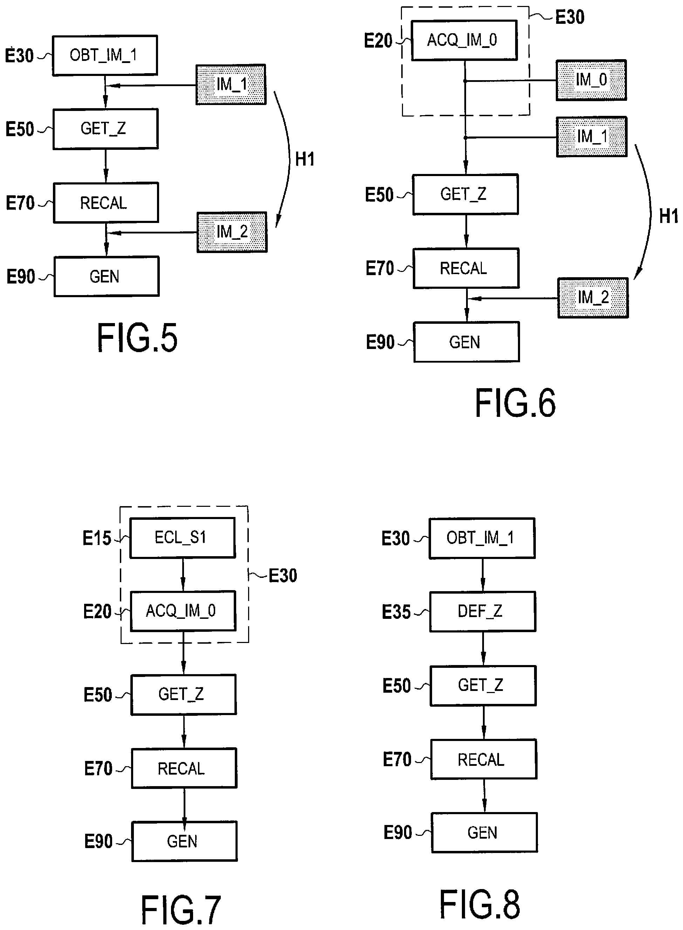

Dans ce mode de réalisation, le système SYS peut comporter deux terminaux T1 et T2 mettant en œuvre les étapes d'un procédé de génération d'une signature numérique conforme à l'invention et telles que décrites en référence aux figures 5 à 14, 18 et 19.

Dans ce mode de réalisation, le premier terminal T1 est, comme illustré à la figure 1, disposé le long ou à proximité d'une ligne de production d'un produit dit « conforme », par exemple un produit destiné à la vente.

Conformément aux figures 3 et 4, le terminal T1 peut consister en un terminal mobile, par exemple un smartphone, un téléphone ou une tablette.

Ce terminal T1 comporte une première source de lumière LUM_1 permettant d'éclairer une surface de référence S_REF apparente du produit conforme ou de l'emballage de ce produit. Cette surface de référence S_REF peut être constituée d'un élément matériel choisi parmi tout ou partie d'un matériau fibreux, plastique, métallique, en cuir, en bois, composite, en verre ou en minéral notamment en une structure cristalline.

Cette première source LUM_1 peut consister en une lumière blanche, et/ou en un flash (par exemple de téléphone ou de tablette). Ce flash peut être tel que représenté à la figure 4.

Conformément à la figure 1, l'angle d'incidence de cette première source de lumière LUM_1 avec la surface de référence S_REF est noté $\alpha$.

Dans un mode de réalisation particulier, cet angle d'incidence $\alpha$ correspond à une incidence rasante, et est de préférence compris entre 16° et 45°, encore de préférence compris entre 16° et 25°, encore de préférence compris entre 16° et 20°.

En variante, le terminal T1 ne comporte pas de source de lumière. Dans ce cas-ci, la surface de référence S_REF peut être éclairée par une source de lumière externe au terminal T1 ou même externe au système SYS.

Le terminal T1 comporte également un module d'acquisition, appelé par la suite « troisième module d'acquisition CAM_3 », et permettant d'acquérir une image dont au moins une partie représente la surface de référence S_REF.

L'acquisition de cette image est réalisée pendant que la surface S_REF est éclairée par la première source LUM_1 ou par une autre source de lumière quelconque.

Ce troisième module d'acquisition CAM_3 peut consister en une caméra, un appareil photo, ou un capteur quelconque.

Dans un mode particulier de réalisation et conformément à la figure 1, le troisième module d'acquisition CAM_3 est positionné sensiblement selon la normal à la surface de référence S_REF.

Dans un mode particulier de réalisation et conformément à la figure 3, le troisième module d'acquisition CAM_3 est situé à une même position relative et dans une même orientation relative par rapport à la première source de lumière LUM_1.

Ce mode de réalisation correspond typiquement au cas où le terminal T1 consiste en un téléphone ou une tablette comportant un flash et un appareil photo, conformément à la figure 4.

Le terminal T1 peut également comporter un module non représenté permettant d'extraire, à partir de l'image acquise par le troisième module d'acquisition CAM_3 (représentant la surface de référence S_REF), une signature dite « authentique » caractérisant la structure de la surface de référence S_REF.

Dans un mode particulier de réalisation, ce module permet d'obtenir une ou plusieurs caractéristiques structurelles de la surface de référence S_REF par détection de l'interaction de cette surface de référence S_REF avec la première source de lumière LUM_1.

Cette surface de référence S_REF peut être constituée d'un élément matériel choisi parmi tout ou partie d'un matériau fibreux, plastique, métallique, en cuir, en bois, composite, en verre ou en minéral notamment en une structure cristalline.

L'extraction de cette signature authentique sera détaillée en référence aux figures 5 à 14, 18 et 19.

La signature authentique de cette surface de référence S_REF permet de manière plus générale de caractériser le produit conforme ou l'emballage de ce produit conforme dont fait partie cette surface S_REF.

En alternative, ce module, compris dans le système SYS, est dissocié du terminal T1.

Le système SYS comporte également un deuxième terminal T2, pouvant être distinct du premier terminal T1, tel que représenté aux figures 1 à 4.

Ce terminal T2 peut consister en un système mobile, par exemple un smartphone, un téléphone une tablette.

Ce deuxième terminal T2 comporte un premier module d'acquisition CAM_1 pouvant être utilisé pour acquérir une image d'une surface dite « examinée » S_1, cette surface S_1 étant comprise dans un produit dit « produit candidat » ou dans l'emballage de ce produit candidat.

Cette surface examinée S_1 peut, tout comme la surface de référence S_REF, être constituée d'un élément matériel choisi parmi tout ou partie d'un matériau fibreux, plastique, métallique, en cuir, en bois, composite, en verre ou en minéral notamment en une structure cristalline.

Le premier module d'acquisition CAM_1 peut consister en une caméra, un appareil photo, ou un capteur quelconque, et est représenté aux figures 2 et 4.

Le deuxième terminal T2 peut également comporter une deuxième source de lumière LUM_2, représentée aux figures 2 et 4.

Cette deuxième source LUM_2 peut consister en une lumière blanche, et/ou en un flash (par exemple de téléphone ou de tablette).

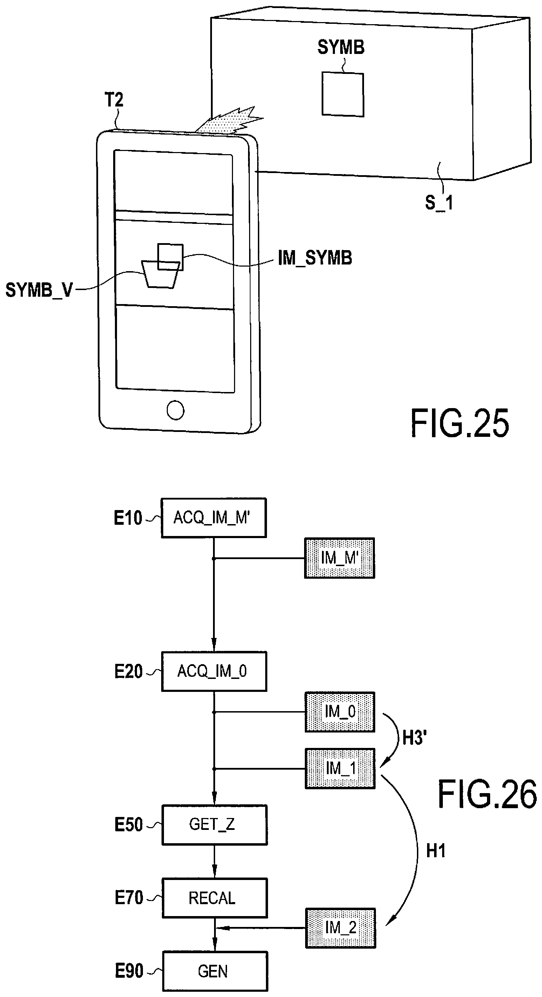

Le terminal T2 peut également comporter un écran, tel que représenté à la figure 25, cet écran permettant d'afficher une image du champ d'acquisition du premier module d'acquisition CAM_1, sur laquelle est superposé un symbole virtuel SYMB_V qui correspond par exemple au contour du symbole.

Dans un mode particulier de réalisation, le terminal T2 comporte également un module non représenté permettant d'extraire, à partir de l'image acquise par le premier module d'acquisition CAM_1 (représentant la surface examinée S_1), une signature dite « générée » caractérisant la structure de la surface examinée S_1.

Dans un mode particulier de réalisation, ce module permet d'obtenir une ou plusieurs caractéristiques structurelles de la surface examinée S_1 par détection de l'interaction de cette surface examinée S_1 avec la deuxième source de lumière LUM_2.

La génération de cette signature sera détaillée en référence aux figures 5 à 14, 18 et 19.

La signature générée de cette surface examinée S_1 permet de manière plus générale de caractériser le produit candidat ou l'emballage de ce produit candidat dont fait partie cette surface S_1.

En alternative, ce module, compris dans le système SYS, est dissocié du terminal T2.

Dans un mode particulier de réalisation, la signature générée de la surface examinée S_1 du produit candidat est comparée à la signature authentique de la surface de référence S_REF du produit conforme, lors d'une étape d'authentification.

Cette comparaison peut par exemple être effectuée par un module compris dans le terminal T1, par un module compris dans le terminal T2, ou par un module externe et distinct de ces deux terminaux.

Dans ce dernier cas, le module externe peut par exemple comporter un sous-module de communication lui permettant de communiquer avec les terminaux T1 et T2 pour récupérer la signature générée et la signature authentique.

Grace à cette comparaison, il est par exemple possible d'estimer qu'un produit candidat est issu d'une ligne de production particulière, si la signature générée de la surface examinée S_1 du produit candidat est sensiblement identique à la signature authentique de la surface de référence S_REF du produit conforme.

Dans un mode particulier de réalisation, le système SYS ne comporte que le terminal T2.

Premier mode général de réalisation

La **figure 5** représente les étapes principales d'un procédé de génération d'une signature numérique d'une surface examinée S_1, ce procédé étant conforme à un premier mode général de réalisation de l'invention.

Ce procédé comporte quatre étapes E30, E50, E70 et E90 et peut être mis en œuvre par un système tel que représenté aux figures 1, 3, 4, 22-24.

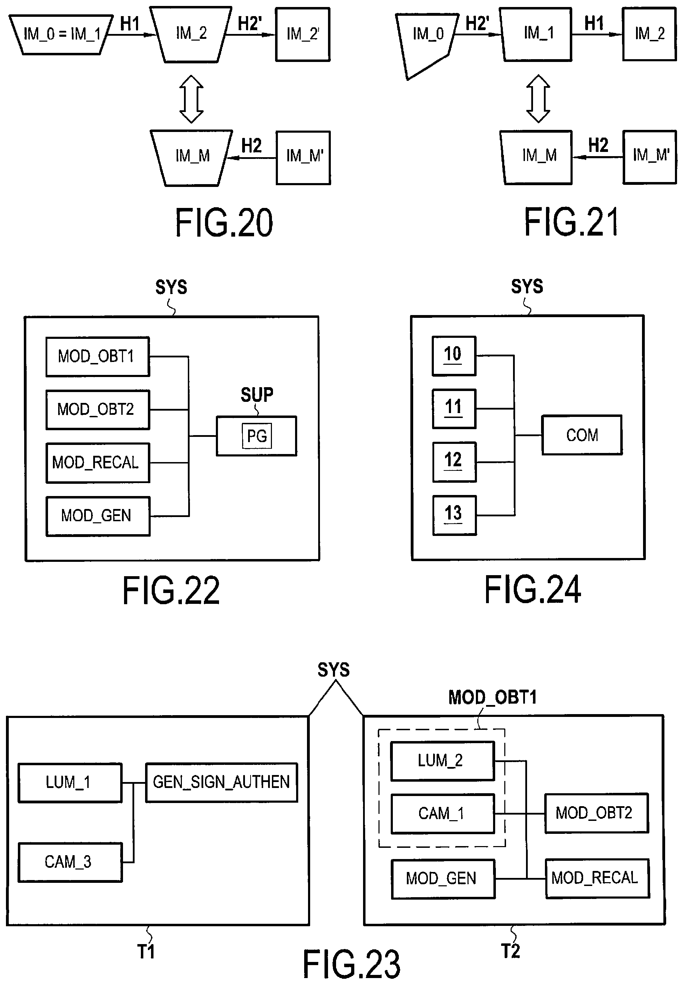

Une image IM_1 dite « décalée » est obtenue au cours d'une étape E30 par un module MOD_OBT1 du système SYS tel que représenté à la **figure 22.**

Ce module MOD_OBT1 peut être compris dans le terminal T2 du système SYS, tel que représenté à la **figure 23.**

Dans un mode particulier de réalisation, une partie de cette image décalée IM_1 représente la surface examinée S_1. En variante, toute l'image décalée IM_1 représente la surface examinée S_1.

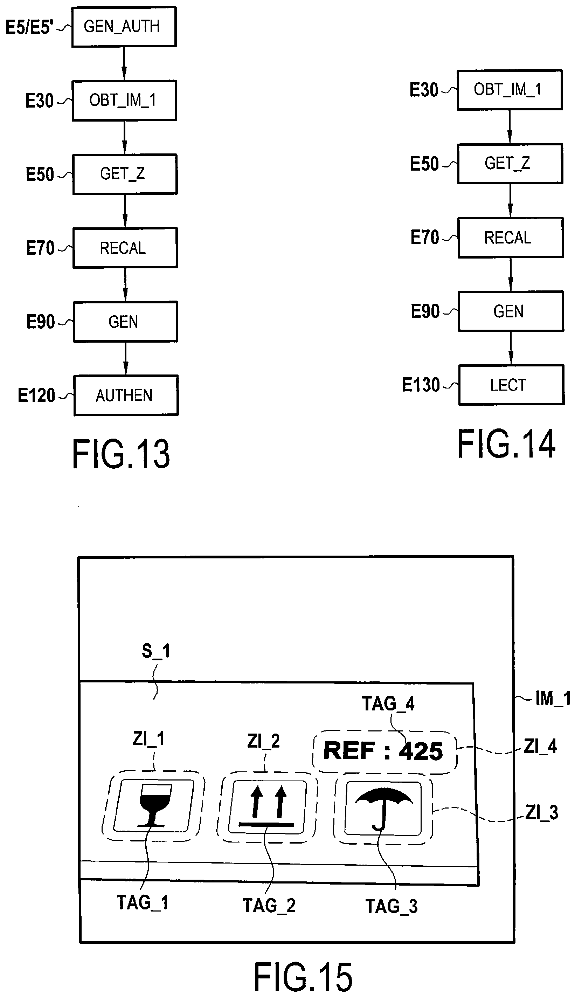

Cette image IM_1 peut être telle que représentée à la **figure 15.**

Dans un mode particulier de réalisation et conformément à la **figure 6,** l'étape E30 d'obtention de l'image décalée IM_1 comporte une étape E20 d'acquisition d'une image dite « acquise » IM_0 par le premier module d'acquisition CAM_1 représenté aux figures 1 à 4.

Le module d'obtention MOD_OBT1 comporte alors le premier module d'acquisition CAM_1, comme représenté à la figure 23.

Dans ce premier mode général de réalisation, l'image acquise IM_0 correspond à l'image décalée IM_1 (que nous appellerons par la suite « image décalée IM_1 »).

Comme expliqué précédemment, le terminal T2 peut comporter un écran, tel que représenté à la figure 25, permettant d'afficher une image du champ d'acquisition du premier module d'acquisition CAM_1 sur laquelle est superposé un symbole virtuel SYMB_V.

Dans ce cas, la surface S_1 peut comporter un symbole SYMB et l'étape E20 d'acquisition de l'image acquise IM_0 est déclenchée automatiquement lorsque l'image IM_SYMB dudit symbole SYMB dans le champ d'acquisition coïncide avec le symbole virtuel SYMB_V.

Dans un mode particulier de réalisation et conformément à la **figure 7,** l'étape E30 comporte également une étape E15 d'éclairage par la deuxième source LUM_2 de la surface examinée S_1, cet éclairage étant au moins effectué pendant l'étape E20 d'acquisition.

Le module d'obtention MOD_OBT1 comporte alors la deuxième source LUM_2, comme représenté à la figure 23.

Dans un mode particulier de réalisation et conformément à la **figure 8,** le procédé comporte une étape E35 de définition de zones équivalentes ZEQ_1, ZEQ_2, ZEQ_3, ZEQ_4 dans une image modèle IM_M dont au moins une partie représente la surface de référence S_REF.

Cette étape est suivie d'une étape E50 d'obtention de zones d'intérêt ZI_1, ZI_2, ZI_3 et ZI_4 dans cette image décalée IM_1, telles que représentées à la figure 15.

Ces zones d'intérêt sont obtenues par une méthode de mise en correspondance (en anglais « Template Matching ») de l'image décalée IM_1 avec des zones dites équivalentes ZEQ_1, ZEQ_2, ZEQ_3, ZEQ_4 prédéterminées, ces zones équivalentes étant comprises dans une l'image modèle IM_M.

Cette étape E50 peut être réalisée par un module MOD_DEF du système SYS, tel que représenté à la figure 22. Ce module MOD_DEF peut également être compris dans le terminal T2, tel que représenté à la figure 23. En variante, cette étape peut être effectuée par un module extérieur au terminal T2.

Dans un mode particulier de réalisation, ces zones d'intérêts ZI_1, ZI_2, ZI_3 et ZI_4 sont positionnées autour et/ou par rapport à un ou plusieurs éléments graphiques TAG_1, TAG_2, TAG_3 et TAG_4 présents sur la surface examinée S_1, par exemple tels que représentés à la figure 15.

Préférablement, ce ou ces éléments graphiques TAG_1, TAG_2, TAG_3 et TAG_4 sont contrastés par rapport à la couleur de fond de la surface examinée S_1.

Préférablement, ces éléments graphiques TAG_1, TAG_2, TAG_3 et TAG_4 sont de formes différentes.

Dans un mode particulier de réalisation, l'étape E50 est précédée d'une étape de définition d'une zone dite « de recherche » dans l'image décalée IM_1 (non représentée), cette zone de recherche comportant les zones d'intérêt ZI_1, ZI_2, ZI_3, ZI_4, et la méthode de mise en correspondance est effectuée à partir de cette zones de recherche.

Cette zone de recherche peut par exemple être définie comme étant :

- localisée dans l'image décalée IM_1 à des positions proches de celles des zones d'intérêt ZI_1, ZI_2, ZI_3 et ZI_4; et
- de taille plus importante dans l'image décalée IM_1 que les zones d'intérêts ZI_1, ZI_2, ZI_3 et ZI_4.

La zon de recherche correspond donc à une zone dans laquelle les zones d'intérêt ZI_1, ZI_2, ZI_3 et ZI_4 vont être localisées par la méthode de mise en correspondance. Elle permet de définir un périmètre particulier dans l'image décalée IM_1, dans lequel les zones d'intérêt ZI_1, ZI_2, ZI_3 et ZI_4 ont une probabilité plus élevée de se trouver, pour effectuer plus efficacement la méthode de mise en correspondance.

L'étape E50 est suivie d'une étape E70 d'obtention d'une image dite « recalée » IM_2, par recalage de l'image décalée IM_1 avec une image dite « modèle » IM_M.

Cette étape de recalage E70 peut être effectuée par un module MOD_RECAL du système SYS, tel que représenté à la figure 22.

Il peut également être compris dans le terminal T2, tel que représenté à la figure 23. En variante, ce module MOD_RECAL est extérieur au terminal T2.

Dans un mode particulier de réalisation, une partie de cette image modèle IM_M représente la surface de référence S_REF. En variante, toute l'image modèle IM_M représente la surface de référence S_REF.

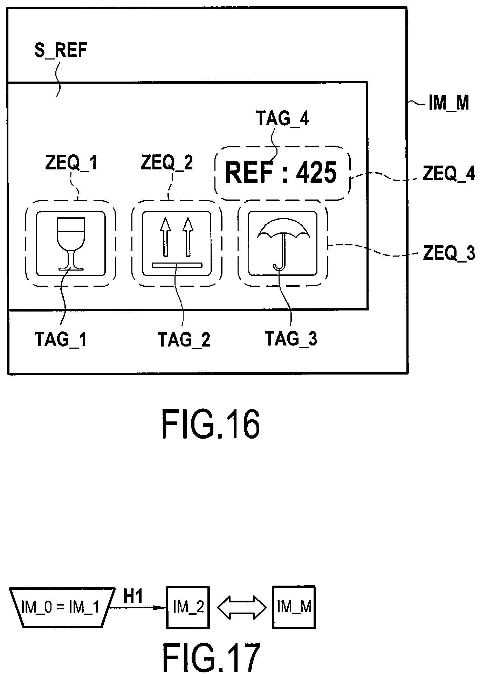

Cette image modèle IM_M peut être telle que représentée à la **figure 16.**

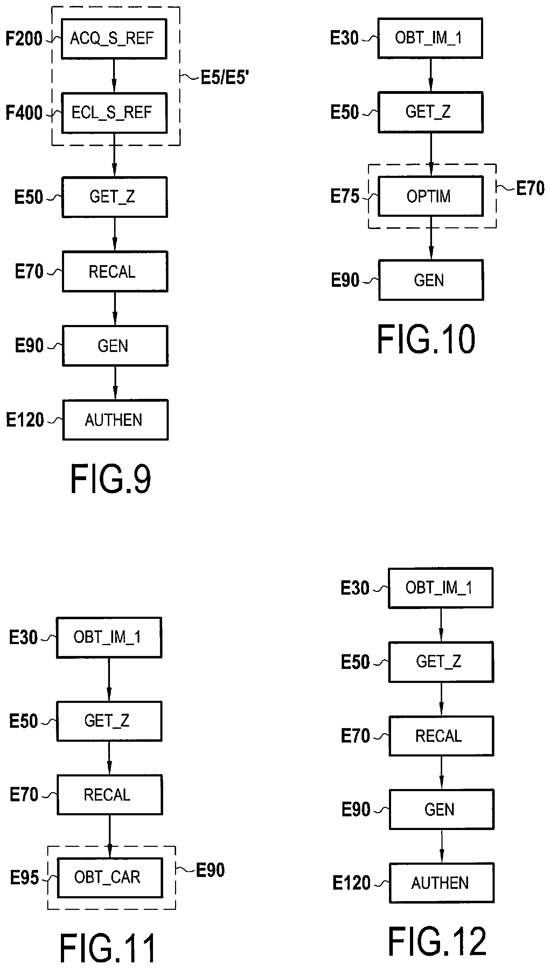

Dans ce premier mode général de réalisation et conformément à la **figure 9,** l'image modèle IM_M correspond à l'image acquise par le troisième module d'acquisition CAM_3 de la surface S_REF, lors d'une étape F200.

Dans un mode préféré de réalisation, l'axe optique de ce troisième module d'acquisition CAM_3 est orienté sensiblement selon la normale à la surface de référence S_REF.

Ce mode de réalisation correspond par exemple à une acquisition possible de la surface de référence S_REF d'un produit ou d'un emballage de ce produit le long d'une ligne de production de ce produit.

Dans un mode particulier de réalisation et toujours en référence à la figure 9, la surface S_REF est éclairée lors d'une étape F400 par la source de lumière LUM_1, pendant au moins l'étape d'acquisition F200, avec un angle α d'attaque par rapport à la surface de référence S_REF.

Dans un mode particulier de réalisation, cet angle α correspond à une incidence rasante.

Dans un mode particulier de réalisation, cet angle α est compris de préférence entre 16° et 45°, encore de préférence compris entre 16° et 25°, encore de préférence compris entre 16° et 20°.

Dans un mode particulier de réalisation, la surface de référence S_REF comporte les éléments graphiques TAG_1, TAG_2, TAG_3 et TAG_4, tels que représentés à la figure 16.

Le recalage de l'image décalée IM_1 avec l'image modèle IM_M correspond à une correction de la perspective entre ces deux images, et permet de simuler le fait de replacer la surface examinée S_1 de l'image décalée IM_1 dans le même plan et avec la même orientation que le plan dans lequel se trouve la surface de référence S_REF de l'image modèle IM_M.

Ce recalage ou cette obtention de l'image recalée IM_2 est effectué(e) en appliquant une première homographie H1 à l'image décalée IM_1.

La première homographie H1 est obtenue à partir des zones d'intérêt ZI_1, ZI_2, ZI_3 et ZI_4 comprises dans l'image décalée IM_1 et des zones équivalentes ZEQ_1, ZEQ_2, ZEQ_3 et ZEQ_4 de l'image modèle IM_M telles que représentée à la figure 16.

Dans un mode particulier de réalisation, la méthode de mise en correspondance permet d'obtenir, à partir d'une zone de recherche, une première estimation des paramètres d'une application affine T transformant des points prédéterminés de la zone d'intérêt ZI_1 en des points prédéterminés correspondant de la zone équivalent ZEQ_1.

Cette estimation peut par exemple être obtenue en utilisant une méthode des moindres carrés, ou une méthode d'intercorrélation, entre les coordonnées des points de la zone équivalente ZI_1 et les coordonnées des points de la zone de recherche.

La méthode d'intercorrélation peut être définie comme visant à maximiser, pour plusieurs points (x,y) compris dans la zone de recherche de l'image modèle IM_M, le coefficient d'intercorrelation normé définit de la manière suivante :

$$R(x,y) = \frac{\sum_{x',y'}[T'(x',y').I'(x+x',y+y')]}{\sqrt{\sum_{x',y'}T'(x',y')^2.\sum_{x',y'}I'(x+x',y+y')^2}}$$

Avec

$$T'(x',y') = T(x',y') - 1/(w.h).\sum_{x'',y''}T(x,y) \; ;$$

$$I'(x+x',y+y') = I(x+x',y+y') - 1/(w.h).\sum_{x'',y''}I(x+x'',y+y'') \; ;$$

Avec :

I la zone de recherche dans l'image décalée IM_1 ;

T la zone d'intérêt ZI_1 dans l'image modèle IM_M ; et

w et h les dimensions de T.

Cette estimation peut également être obtenue par d'autres méthodes d' « Image matching » ou d' « Image template » connues.

Dans un mode particulier de réalisation et conformément à la **figure 10,** la méthode de mise en correspondance comporte une étape E75 d'obtention d'une deuxième estimation des paramètres de l'application affine, cette deuxième estimation étant obtenue par optimisation de la première estimation avec un algorithme itératif visant à maximiser un premier coefficient de corrélation amélioré entre la zone équivalente ZEQ_1 et la zone de recherche comportant la zone d'intérêt ZI_1.

Ce premier coefficient de corrélation amélioré (« enhanced correlation coefficient » en anglais) peut être défini de la même manière que dans la section 3.1 du document « Parametric Image Alignment Using Enhanced Correlation Coefficient Maximization » précédemment cité.

Une fois les paramètres de chacune des applications affines transformant chaque zone d'intérêt ZI_1 en une zone équivalente ZEQ_1 estimés, un ensemble de couples de points est obtenu, chaque couple comportant un point compris dans une zone équivalente ZEQ_1 et un autre point compris dans la zone d'intérêt Z_I1 définie par la méthode de mise en correspondance de la zone équivalente ZI_1 avec l'image inclinée IM_1.

Dans un mode particulier de réalisation, ces couples de points comportent les ou correspondent aux centres des zones d'intérêt ZI_1, ZI_2, ZI_3 et ZI_4 et aux centres des zones équivalentes ZEQ_1, ZEQ_2, ZEQ_3 et ZEQ_4.

Les paramètres de la première homographie H1 transformant l'image décalée IM_1 en l'image recalée IM_2 peuvent alors être estimés à partir de ces couples de points.

Par exemple, ces paramètres peuvent être estimés grâce à une méthode telle que celle décrite dans la partie 4.2 du document « Image Registration For Perspective Deformation Recovery » (Geaorge Wolberg et Siavash Zokai).

Dans un mode particulier de réalisation, l'obtention de la première homographie H1 comporte l'utilisation d'un algorithme dit « RANSAC » (RAndom SAmple Consensus).

Cet algorithme permet d'exclure les points aberrants de l'ensemble des points ou des couples de points utilisé pour estimer les paramètres de cette première homographie H1.

Dans un mode particulier de réalisation, l'obtention de la première homographie H1 comporte également l'utilisation d'un algorithme itératif d'optimisation visant à maximiser un deuxième coefficient de corrélation amélioré entre l'image décalée IM_1 et l'image modèle IM_M.

Cet algorithme utilisant ce deuxième coefficient de corrélation amélioré est analogue à celui utilisant le premier coefficient tel que décrit précédemment, mais s'applique à présent dans le cadre du recalage de l'image décalée avec l'image modèle, et non plus lors de la mise en correspondance d'une zone équivalente ZI_1 avec l'image modèle IM_M.

L'étape E70 d'obtention de l'image recalée IM_2 est suivie d'une étape E90 de génération de la signature numérique, à partir de cette image recalée IM_2, la signature numérique caractérisant la structure de la surface examinée S_1.

Cette étape de génération E90 est mise en œuvre par un module MOD_GEN, par exemple compris dans le terminal T2 tel que représenté à la figure 14, ou externe au terminal T2.

Dans un mode particulier de réalisation et conformément à la **figure 11,** l'étape E90 de génération de la signature numérique comporte une étape E95 d'obtention d'une caractéristique structurelle de la surface examinée S_1 par détection de l'interaction de la surface examinée S_1 avec la deuxième source de lumière LUM_2.

Dans ce premier mode général de réalisation, la détection de l'interaction est effectuée par analyse de l'image recalée IM_2.

Dans un mode particulier de réalisation et conformément à la **figure 12,** l'étape E90 de génération de la signature générée est suivie d'une étape E120 d'authentification de la surface examinée S_1 par comparaison de la signature générée avec une signature numérique authentique, cette signature authentique caractérisant la structure de la surface de référence S_REF.

Dans ce premier mode général de réalisation, cette signature authentique est générée lors d'une étape E5, à partir de l'image modèle IM_M, tel que représenté à la **figure 13.**

Plus précisément, la génération de cette signature authentique comporte l'obtention d'une caractéristique structurelle de la surface de référence S_REF par détection de l'interaction de la surface de référence S_REF avec la première source de lumière LUM_1.

Dans un mode particulier de réalisation et conformément à la **figure 14,** le procédé comporte également une étape E130 de lecture d'informations protégées, par exemple des informations contenues dans un code visuel non représenté disposé sur la surface examinée ou sur un produit ou un emballage comprenant la surface examinée.

Lors de la lecture de ces informations protégées, ces dernières sont soumises sous forme numérique à un traitement numérique inverse d'un traitement utilisé pour leur protection, ce traitement utilisant la signature générée. Par exemple, ces informations protégées peuvent être contenues dans un code-barres en une dimension ou en deux dimensions.

La **figure 17** résume les étapes principales du premier mode général de réalisation : une image décalée IM_1 d'une surface examinée S_1 est obtenue, correspondant à une image IM_0 acquise par le module d'acquisition CAM_3. Puis l'image IM_1 est recalée par rapport à l'image modèle IM_M représentant la surface de référence S_REF, pour obtenir l'image recalée IM_2. La signature numérique de cette image recalée est alors extraite. La double flèche illustre ici le lien entre deux images représentant des surfaces orientées et positionnées de la même façon.

<u>Deuxième mode général de réalisation</u>

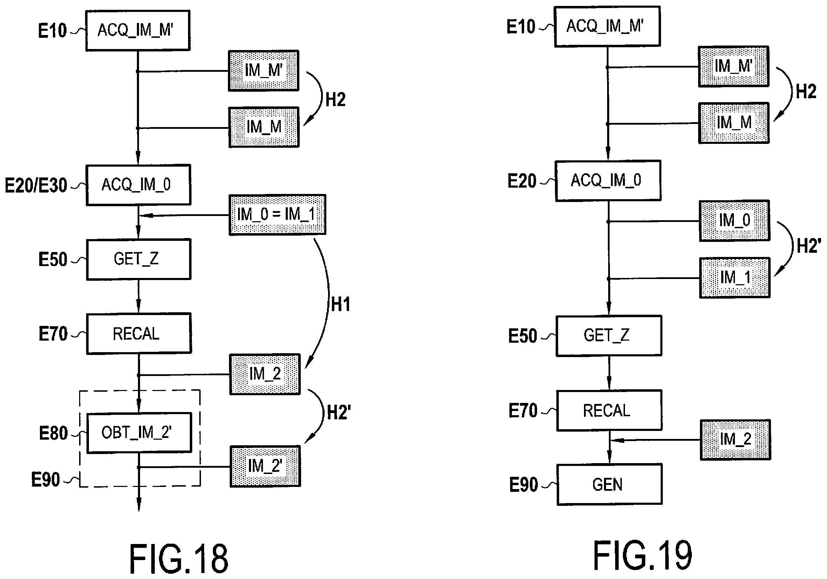

Les **figures 18 et 19** représentent des procédés de génération d'une signature numérique d'une surface examinée S_1, ces procédés étant conformes à un deuxième mode général de réalisation de l'invention.

Ces deux procédés reprennent les quatre étapes principales E30, E50, E70 et E90 du premier mode général de réalisation, et peuvent également être mis en œuvre par un système tel que représenté aux figures 1, 3, 4, et 22-24.

Ils reprennent également les étapes facultatives E15, E60, E75, E95, E120 et E130 du premier mode général de réalisation.

Comme dans le premier mode général de réalisation, l'étape E30 d'obtention de l'image décalée IM_1 comporte une étape E20 d'acquisition d'une image dite « acquise » IM_0 par le premier module d'acquisition CAM_1 représenté aux figures 1 à 4.

Cependant, dans ce deuxième mode général de réalisation, l'image modèle IM_M est obtenue en appliquant une deuxième homographie H2 à une image dite « orientée » IM_M' représentant la surface de référence S_REF.

En référence à la figure 13, cette image orientée IM_M' est générée au cours d'une étape E5'.

En référence à la figure 9, cette image orientée IM_M' est acquise au cours d'une étape F200 avec un deuxième module d'acquisition CAM_2 positionné sensiblement selon la normale à la surface de référence S_REF. Une étape d'éclairage F400 analogue au premier mode de réalisation est effectuée au moins pendant l'étape F200 d'acquisition.

La deuxième homographie H2 est préférablement choisie de manière à transformer l'image orientée IM_M' en une image de la surface de référence S_REF simulée comme étant acquise dans des conditions particulières, par exemple par un téléphone ou une tablette.

Cette transformation permet en outre de « déplacer » la surface de référence S_REF dans l'image modèle IM_M selon une position et une orientation la plus proche possible de celle de l'image acquise IM_0.

Selon une première variante de ce deuxième mode de réalisation et conformément à la figure 18, l'image décalée IM_1 correspond à l'image acquise IM_0.

Des zones d'intérêt sont alors obtenues dans l'image décalée IM_1 lors d'une étape E50, puis l'image décalée IM_1 est ensuite transformée au cours d'une étape E70 en une image recalée IM_2, à partir de ces zones d'intérêt.

Les différentes étapes permettant de recaler l'image IM_1 sont effectuées de manière analogue au premier mode général de réalisation.

Une fois l'image recalée IM_2 obtenue, au cours d'une étape E80 l'inverse de la deuxième homographie H2, nommée H2', lui est alors appliquée de manière à la recaler avec l'image orientée IM_M'. Une image dite « transformée » IM_2' est ainsi obtenue.

Au cours de l'étape E90, la signature numérique de la surface S_1 est alors générée, à partir de l'image transformée IM_2'.

Selon une deuxième variante du deuxième mode de réalisation et conformément à la figure 19, l'image décalée IM_1 est d'abord obtenue par application de l'homographie H2' à l'image acquise IM_0, puis est recalée par rapport à l'image orientée IM_M'.

Dans cette variante, l'homographie H2' est d'abord appliquée à l'image acquise IM_0 pour obtenir une image qui est ensuite recalée à l'image modèle IM_M, contrairement à la variante précédente dans laquelle l'image acquise IM_0 = IM_1 est d'abord recalée pour obtenir une image qui est ensuite recalée par rapport à l'image orientée IM_M'.

Puis, au cours de l'étape E90, la signature numérique de la surface examinée S_1 est générée, à partir de l'image recalée IM_2.

La **figure 20** résume la première variante de ce deuxième mode de réalisation : une image décalée IM_1 d'une surface examinée S_1 est obtenue, correspondant à une image IM_0 acquise par le module d'acquisition CAM_3. Puis l'image IM_1 est recalée par rapport à l'image modèle IM_M représentant la surface de référence S_REF, pour obtenir l'image recalée IM_2, l'image modèle IM_M ayant été obtenue après transformation de l'image orientée IM_M' en lui appliquant l'homographie H2. L'inverse de l'homographie H2, appelée H2', est alors appliquée à l'image recalée IM_2 pour obtenir l'image transformée IM_2' de laquelle la signature est extraite.

La **figure 21** résume la deuxième variante de ce deuxième mode de réalisation : une image décalée IM_1 d'une surface examinée S_1 est obtenue, par application de l'homographie H2' à une image IM_0 acquise par le module d'acquisition CAM_3. Puis l'image IM_1 est recalée par rapport à l'image orientée IM_M' représentant la surface de référence S_REF, pour obtenir l'image recalée IM_2, l'image modèle IM_M ayant été obtenue après transformation de l'image orientée IM_M' en lui appliquant l'homographie H2. La signature est alors extraite par analyse de l'image recalée IM_2.

Troisième mode de réalisation

Le procédé selon un troisième mode de réalisation reprend les quatre étapes principales E30, E50, E70 et E90 des premier et deuxième modes généraux de réalisation.

Comme dans les premier et deuxième modes généraux de réalisation, l'étape E30 d'obtention de l'image décalée IM_1 comporte une étape E20 d'acquisition d'une image dite « acquise » IM_0 par un module d'acquisition.

Dans ce troisième mode général de réalisation, l'image acquise IM_0 correspond à l'image décalée IM_1 (que nous appellerons par la suite « image décalée IM_1 »).

Des zones d'intérêt sont obtenues dans l'image décalée IM_1 lors d'une étape E50, puis l'image décalée IM_1 est ensuite transformée au cours d'une étape E70 en une image recalée IM_2, à partir de ces zones d'intérêt.

Les différentes étapes permettant de recaler l'image IM_1 sont effectuées de manière analogue au premier mode général de réalisation : l'image recalée IM_2 est obtenue en appliquant la première homographie H1 à l'image décalée IM_1 par une méthode déjà décrite de mise en correspondance de points prédéterminés de zones d'intérêt de l'image décalée IM_1 par rapport à ceux de l'image modèle IM_M.

Ce troisième mode de réalisation diffère cependant des deux premiers sur la disposition des modules d'acquisition permettant d'acquérir l'image modèle et l'image décalée, sur la disposition des sources de lumière, ainsi que sur l'extraction des signatures.

Dans ce mode de réalisation, l'image modèle IM_M de la surface de référence S_REF est acquise avec un module d'acquisition et une source de lumière ayant une même orientation par rapport à la surface de référence S_REF, par exemple un même angle d'inclinaison β, différent de 90° par rapport à la surface de référence. Cette inclinaison du module d'acquisition et de la source de lumière évite la formation d'un halo de lumière.

Ce troisième mode est ainsi particulièrement avantageux pour les surfaces spéculaires ou brillantes sur lesquelles un éclairage à 90° forme un halo de lumière qui réduit le contraste et affecte l'extraction de la signature.

Puis une homographie est effectuée pour compenser l'orientation du module d'acquisition et de la source de lumière. de manière à obtenir une image réorientée apparaissant comme ayant été acquise avec un module d'acquisition positionné à 90° avec la surface de référence S_REF. Cette homographie comprend par exemple une rotation d'un angle -β de l'image modèle IM_M, combinée éventuellement avec une première homographie H1 telle que décrite précédemment pour les autres modes de réalisation.

Puis la signature authentique de la surface de référence S_REF est extraite à partir de cette image réorientée.

Par ailleurs, l'image décalée de la surface examinée est acquise avec un module d'acquisition et une source de lumière orientés selon un angle β' par rapport à la surface examinée S_1, les angles β et β' pouvant préférentiellement être similaires.

Cet angle β' est assuré par exemple par la mise en coïncidence des symboles SYMB_V et SYMB déjà décrits en référence à la figure 25, ou de tout autre moyen permettant de garantir de l'orientation du module d'acquisition par rapport à la surface examinée au moment de l'acquisition. Ce mécanisme visant à garantir l'orientation du module d'acquisition peut être utilisé dans les autres modes de réalisation de l'invention. L'image décalée est, comme expliqué ci-dessus, recalée avec l'image modèle, de manière à obtenir l'image recalée.

Puis une homographie est effectuée pour compenser l'orientation du module d'acquisition et de la source de lumière de manière à obtenir une image remise à plat apparaissant comme ayant été acquise avec un module d'acquisition positionné à 90° avec la surface examinée. Cette homographie comprend par exemple une rotation d'un angle - β' de l'image recalée, combinée éventuellement avec une première homographie H1 telle que décrite précédemment pour les autres modes de réalisation.

Enfin, au cours de l'étape E90, la signature numérique de la surface S_1 est alors générée, à partir de l'image remise à plat.

Quatrième mode de réalisation

L'invention propose un quatrième mode de réalisation qui va maintenant être décrit en référence à la figure 26. Les étapes E20, E50, E70 et E90 de ce quatrième mode de réalisation sont identiques aux étapes de la deuxième variante du deuxième mode de réalisation portant les mêmes références.

On rappelle que dans la deuxième variante du deuxième mode de réalisation, on applique à l'image acquise une homographie H2, parfaitement définie par l'image modèle IM_M et par l'image « orientée » IM_M'. Cette homographie H2 peut en ce sens être qualifiée de « statique », en ce qu'elle est toujours la même, quelle que soit l'image acquise IM_0.a différence introduite par le quatrième mode de réalisation par rapport à la deuxième variante du deuxième mode de réalisation réside dans le remplacement de l'homographie H2, fixe ou statique, par une homographie H3 calculée dynamiquement après l'étape d'acquisition E20 en fonction de l'image acquise IM_0, par rapport à l'image orientée IM_M'.

Ainsi, dans ce quatrième mode de réalisation, l'image décalée IM_1 est obtenue par l'application de l'homographie H3 à l'image acquise IM_0. Puis l'image IM_1 est recalée par rapport à l'image orientée IM_M' représentant la surface de référence S_REF, pour obtenir l'image recalée IM_2 La signature est alors extraite par analyse de l'image recalée IM_2.

Dans ce quatrième mode de réalisation, le principal avantage du calcul dynamique de H3, est de faciliter le positionnement du module d'acquisition en rendant son orientation plus « tolérante », par exemple plus tolérante sur l'inclinaison de son axe optique, permettant ainsi d'accélérer le déclenchement de l'acquisition ce qui facilite l'expérience de l'utilisateur.

Pour expliquer ceci, il doit d'abord être précisé que l'homographie H3 est dite « dynamique » car elle est calculée lors de l'acquisition en fonction de l'image acquise IM_0 et pas dépendante d'une orientation particulière, alors que l'homographie H2 (ou H2') est calculée à partir de l'image modèle IM_M et de l'image orientée IM_M' simulant une orientation particulière la plus proche de celle de l'image acquise IM_0. H2 est donc dite homographie « fixe ».

Avantageusement, le fait d'utiliser l'homographie « dynamique » H3 plutôt qu'une homographie « fixe » comme H2 (cf. deuxième variante du 2eme mode de réalisation) permet donc de recaler l'image dynamiquement lors de l'acquisition et de s'affranchir de la nécessité d'avoir une orientation pour l'acquisition de l'image acquise IM_0 qui soit proche de orientation de l'image modèle IM_M' pour recaler correctement l'image, comme cela pourrait être le cas dans les autres modes de réalisation. ]

La figure 22 représente un système SYS de de génération d'au moins une signature numérique d'au moins une surface examinée, et mettant en œuvre l'un quelconque des deux modes généraux de réalisation de l'invention.

Ce système SYS comporte un module d'obtention MOD_OBT1 permettant d'obtenir, pour chaque surface examinée S_1, une image dite « décalée » IM_1 dont au moins une partie représente la surface examinée S_1.

Le système SYS comporte également un module de définition MOD_OBT2 permettant d'obtenir, pour chaque surface examinée S_1, des zones d'intérêt dans l'image décalée.

Ces zones d'intérêt sont obtenues par une méthode de mise en correspondance de l'image décalée avec des zones dites équivalentes ZEQ_1, ZEQ_2, ZEQ_3, ZEQ_4 prédéterminées, ces zones équivalentes étant comprises dans une image modèle IM_M dont au moins une partie représente la surface de référence S_REF.

Le système SYS comporte également un module de recalage MOD_RECAL permettant de recaler, pour chaque surface examinée S_1, l'image décalée IM_1 avec l'image modèle IM_M, ce recalage étant effectué en appliquant une première homographie H1 à l'image décalée IM_1, l'homographie H1 étant obtenue à partir des zones d'intérêt ZI_1, ZI_2, ZI_3, ZI_4 et des zones équivalentes ZEQ_1, ZEQ_2, ZEQ_3, ZEQ_4.

Le système SYS comporte également un module de génération MOD_GEN permettant de générer, pour chaque surface examinée, une signature numérique à partir de l'image recalée IM_2, cette signature numérique caractérisant la structure de la surface examinée S_1.

Le système SYS comporte enfin un support d'enregistrement SUP dans lequel est stocké un programme PG comportant des instructions permettant de mettre en œuvre le procédé.

Dans un mode particulier de réalisation et conformément à la figure 23, le système SYS comporte :

- un premier module T1 comportant une première caméra CAM_2 et une première source lumineuse LUM_1 formant un angle d'attaque par rapport à la surface de référence S_REF correspondant à une incidence rasante, l'angle d'attaque étant de préférence compris entre 16° et 45°, encore de préférence compris entre 16° et 25°, encore de préférence compris entre 16° et 20° ; et
- un deuxième module comportant un terminal communicant T2, une deuxième caméra CAM_1 et une deuxième source lumineuse LUM_2.

Dans le mode de réalisation décrit ici, le système SYS possède l'architecture matérielle d'un ordinateur, telle que représentée schématiquement à la figure 24.

Le système SYS comporte ainsi un processeur 10, une mémoire non volatile réinscriptible 11, une mémoire morte de type ROM (pour « Read-only memory », en anglais) 12, une mémoire vive de type RAM (pour « Random-access memory », en anglais) 13 et un module COM de communication.

La mémoire morte 12 du système SYS constitue un support d'enregistrement conforme à l'invention, lisible par le processeur 10 et sur lequel est enregistré un programme d'ordinateur conforme à l'invention comportant des instructions pour l'exécution des étapes d'un procédé de génération d' une signature numérique d'une surface examinée selon l'invention, dont les étapes ont été détaillées en référence aux figures 5 à 14, 18 et 19.

**Revendications**

1. Procédé de génération d'une signature numérique d'une surface d'un élément matériel en matériau fibreux, en cuir ou métallique, dite « surface examinée » (S_1), ledit procédé étant mis en œuvre par un système de traitement des données, ledit procédé comportant, pour ladite surface examinée (S_1) :

   - une étape (E30) d'obtention d'une image (IM_1) dite « décalée » représentant ladite surface examinée (S_1) ;

   une étape (E50) d'obtention de zones d'intérêt (ZI_1, ZI_2, ZI_3, ZI_4) dans ladite image décalée (IM_1), chacune desdites zones d'intérêt étant obtenue par une méthode de mise en correspondance, en anglais « Template Matching », d'une zone d'intérêt de ladite image décalée (IM_1) avec une zone dite équivalente (ZEQ_1, ZEQ_2, ZEQ_3, ZEQ_4) prédéterminée, lesdites une zones équivalentes étant comprises dans une image modèle (IM_M) représentant une surface dite « de référence » (S_REF), chacune desdites zones d'intérêt (ZI_1, ZI_2, ZI_3, ZI_4) étant positionnée autour et/ou par rapport à un élément graphique (TAG_1, TAG_2, TAG_3, TAG_4) présent sur ladite surface examinée (S_1), ledit élément graphique (TAG_1, TAG_2, TAG_3, TAG_4) étant également présent sur ladite surface de référence (S_REF) ;

une étape (E70) d'obtention d'une image dite « recalée » (IM_2) par recalage de ladite image décalée (IM_1) avec ladite image modèle (IM_M), ledit recalage étant effectué en appliquant une première homographie (H1) à ladite image décalée (IM_1), ladite première homographie (H1) étant estimée à partir d'une zone de recherche comprenant les zones d'intérêt et à partir des coordonnées de couples de points, un dit couple de points étant obtenu pour chacune desdites zones d'intérêt, chaque couple de points comportant un point prédéterminé d'une dite zone d'intérêt (ZI_1, ZI_2, ZI_3, ZI_4) et un point prédéterminé correspondant de ladite zone équivalente (ZEQ_1, ZEQ_2, ZEQ_3, ZEQ_4), ; et

- une étape (E90) de génération de ladite signature numérique à partir de ladite image recalée (IM_2), ladite signature numérique caractérisant la structure de ladite surface examinée (S_1).

2. Procédé selon la revendication 1, dans lequel ladite étape d'obtention (E30) de ladite image décalée comporte une étape d'acquisition (E20) d'une image dite « acquise » (IM_0) par un premier module d'acquisition (CAM_1), ladite image décalée (IM_1) étant obtenue à partir de ladite image acquise (IM_0).

3. Procédé selon la revendication 2, dans lequel ladite image décalée (IM_1) correspond à ladite image acquise (IM_0) et dans lequel ladite signature est générée dans ladite étape de génération (E90) par analyse de ladite image recalée (IM_2).

4. Procédé selon la revendication 2, comportant une étape préalable (E10) d'acquisition d'une image dite « orientée » (IM_M') de ladite surface de référence (S_REF) avec un deuxième module d'acquisition (CAM_2) positionné sensiblement selon la normale à ladite surface de référence (S_REF), dans lequel ladite image modèle (IM_M) est obtenue en appliquant une deuxième homographie prédéterminée (H2) à ladite image orientée (IM_M').

5. Procédé selon la revendication 4, comportant une étape (E80) d'obtention d'une image dite « transformée » (IM_2') par transformation de ladite image recalée (IM_2) en lui appliquant l'inverse (H2') de ladite deuxième homographie (H2), et dans lequel ladite signature est générée dans ladite étape de génération (E90) par analyse de ladite image transformée (IM_2').

6. Procédé selon la revendication 4, dans lequel ladite image recalée (IM_2) est obtenue par application de ladite homographie inverse (H2') de ladite deuxième homographie (H2) à ladite image acquise (IM_0), et dans lequel ladite signature est générée dans ladite étape (E90) de génération par analyse de ladite image recalée (IM_2).

7. Procédé selon l'une quelconque des revendications 1 à 6, comportant, pour chaque dite surface examinée (S_1), une étape (E120) d'authentification de ladite surface examinée (S_1), ladite étape d'authentification étant effectuée par comparaison de ladite signature générée avec une signature numérique authentique, ladite signature authentique caractérisant la structure de ladite surface de référence (S_REF).

8. Procédé selon la revendication 7, comportant une étape préalable :

- de génération (E5) de ladite signature authentique à partir de ladite image modèle (IM_M), dite génération de premier type, lorsque ladite signature est générée lors de ladite étape de génération (E90) conformément à l'une quelconque des revendications 3 à 5 ; ou
- de génération (E5') de ladite signature authentique à partir de ladite image orientée (IM_M'), dite génération de second type, lorsque ladite signature est générée lors de ladite étape de génération (E90) conformément à la revendication 6 ou 7.

9. Procédé selon la revendication 8, dans lequel ladite étape de génération (E5, E5') de ladite signature authentique comporte :

- une étape (F200) d'acquisition par un troisième module d'acquisition (CAM_3) de ladite surface de référence (S_REF) ; et
- une étape (F400) d'éclairage pendant au moins ladite étape d'acquisition (F200) de ladite surface de référence (S_REF) avec une première source de lumière (LUM_1),

ladite étape d'acquisition (F200) correspondant à :

- une acquisition de ladite image modèle (IM_M) si ladite génération est dudit premier type ; ou à

- une acquisition de ladite image orientée (IM_M') si ladite génération est dudit second type.

**10.** Procédé selon la revendication 9, dans lequel l'axe optique (OX) dudit troisième module (CAM_3) est orienté sensiblement selon la normale à ladite surface de référence (S_REF), et dans lequel ladite surface de référence (S_REF) est éclairée lors de ladite étape (F400) d'éclairage par ladite première source (LUM_1) avec un angle d'attaque ($\alpha$) par rapport à ladite surface de référence correspondant à une incidence rasante.

**11.** Procédé selon la revendication 10, dans lequel ledit angle d'attaque ($\alpha$) est de préférence compris entre 16° et 45°.

**12.** Procédé selon l'une quelconque des revendications 2 à 11, comportant une étape (E15) d'éclairage, au moins pendant ladite étape d'acquisition (E20) effectuée par ledit premier module (CAM_1), de ladite surface examinée (S_1) par une deuxième source de lumière (LUM_2), et dans lequel ladite étape de génération de ladite signature (E90) comporte une étape (E95) d'obtention d'une caractéristique structurelle de ladite surface examinée (S_1) par détection de l'interaction de ladite surface examinée (S_1) avec ladite deuxième source de lumière (LUM_2), ladite détection de l'interaction étant effectuée :

- en analysant ladite image recalée (IM_2) si ladite génération est dudit premier type ; ou
- en analysant ladite image transformée (IM_2') obtenue à partir de ladite image recalée, si ladite génération est dudit second type.

**13.** Procédé selon l'une quelconque des revendications 7 à 12 comportant une étape préalable de génération de ladite signature authentique, dite génération de troisième type, ladite étape de génération de troisième type comportant :

- une étape d'acquisition par un module d'acquisition de ladite image modèle (IM_M) ;
- une étape d'éclairage pendant au moins ladite étape d'acquisition de ladite surface de référence (S_REF) avec une source de lumière, l'axe optique dudit module et ladite source ayant sensiblement une même orientation par rapport à la surface de référence (S_REF), par exemple un même angle d'inclinaison $\beta$ ; et
- une étape d'analyse d'une image dite « réorientée », ladite image réorientée étant obtenue par application d'une homographie compensant l'orientation du module d'acquisition et de la source de lumière, par exemple une première rotation d'un angle -$\beta$ à ladite image modèle (IM_M) ;
dans lequel ladite image décalée (IM_1) correspond à ladite image acquise (IM_0),
ledit procédé comportant une étape d'éclairage, au moins pendant ladite étape d'acquisition (E20) effectuée par ledit premier module (CAM_1), de ladite surface examinée (S_1) par une source de lumière, et dans lequel ladite étape de génération de ladite signature (E90) comporte une étape d'obtention d'une caractéristique structurelle de ladite surface examinée (S_1) par détection de l'interaction de ladite surface examinée (S_1) avec ladite source de lumière, l'axe optique dudit module et ladite source étant orientés sensiblement ayant sensiblement une même orientation par rapport à ladite surface examinée (S_1), par exemple un même angle d'inclinaison $\beta$, ladite détection de l'interaction étant effectuée par analyse d'une image dite « image remise à plat », ladite image remise à plat étant obtenue d'une homographie compensant l'orientation du module d'acquisition et de la source de lumière, par exemple une première rotation d'un angle -$\beta$ à ladite image recalée (IM_2).

**14.** Procédé selon la revendication 12, dans lequel pour l'acquisition d'au moins deux images par ledit premier module (CAM_1), pour chacune des dites images acquises, ladite deuxième source (LUM_2) est localisée à une même position relative et dans une même orientation relative par rapport audit premier module (CAM_1).

**15.** Procédé selon l'une quelconque des revendications 1 à 14, comportant une étape de lecture d'informations protégées (E130), lesdites informations protégées étant soumises sous forme numérique à un traitement numérique inverse d'un traitement utilisé pour leur protection, ledit traitement utilisant ladite signature générée.

**16.** Procédé selon la revendication 15, dans lequel lesdites informations protégées sont contenues dans un code visuel (CODE) disposé sur ladite surface examinée (S_1) ou sur un produit ou un emballage comprenant ladite surface examinée (S_1).

**17.** Procédé selon la revendication 16, dans lequel ledit code visuel (CODE) correspond à un code-barres en une dimension ou en deux dimensions.

**18.** Procédé selon la revendication 1, dans lequel ladite méthode de mise en correspondance obtient, à partir de ladite zone de recherche, une première estimation des paramètres d'une application affine transformant des points prédéterminés desdites zones d'intérêt (ZI_1) en des points prédéterminés correspondants desdites zones équivalentes (ZEQ_1).

19. Procédé selon la revendication 18, dans lequel ladite première estimation est obtenue en utilisant une méthode des moindres carrés entre les coordonnées desdits points desdites zones équivalentes (ZEQ_1) et les coordonnées desdits points de ladite zone de recherche.

20. Procédé selon la revendication 18, dans lequel ladite première estimation est obtenue en utilisant une méthode d'intercorrélation entre les coordonnées desdits points desdites zones équivalentes (ZEQ_1) et les coordonnées desdits points de ladite zone de recherche.

21. Procédé selon l'une quelconque des revendications 18 à 20, dans lequel ladite méthode de mise en correspondance comporte une étape d'obtention (E75) d'une deuxième estimation desdits paramètres, ladite deuxième estimation étant obtenue par optimisation de ladite première estimation avec un algorithme itératif visant à maximiser un premier coefficient de corrélation amélioré entre ladite zone équivalente (ZEQ_1) et ladite zone de recherche.

22. Procédé selon l'une quelconque des revendications 1 à 21, dans lequel ladite surface de référence constitue une surface dont l'inclinaison et la position par rapport au plan d'acquisition de ladite image modèle sont connues.

23. Procédé selon l'une quelconque des revendications 1 à 22, dans lequel ladite obtention de ladite première homographie (H1) comporte l'utilisation d'un algorithme dit « RANSAC » (RAndom SAmple Consensus).

24. Procédé selon l'une quelconque des revendications 1 à 23, dans lequel ladite obtention de ladite homographie (H1) comporte l'utilisation d'un algorithme itératif d'optimisation visant à maximiser un deuxième coefficient de corrélation amélioré entre ladite image décalée (IM_1) et ladite image modèle (IM_M).

25. Procédé selon l'une quelconque des revendications 1 à 24, comportant une étape préalable (E35) de définition desdites zones équivalentes (ZEQ_1, ZEQ_2, ZEQ_3, ZEQ_4) dans ladite image modèle (IM_M).

26. Procédé selon l'une quelconque des revendications 2 à 25, dans lequel ladite surface examinée (S_1) comporte un symbole (SYMB), l'étape (E20) d'acquisition de l'image acquise étant déclenchée automatiquement en fonction de la détermination d'une orientation dudit premier module d'acquisition (CAM_1) par rapport à la surface examinée, ladite détermination étant effectuée à partir d'une image (IM_SYMB) dudit symbole (SYMB).

27. Procédé selon la revendication 26, ledit procédé comportant une étape d'affichage, sur un écran d'un terminal comportant ledit premier module d'acquisition (CAM_1), d'une image du champ d'acquisition dudit premier module (CAM_1), dans laquelle est superposé un symbole virtuel (SYMB_V), et dans lequel l'étape (E20) d'acquisition de l'image acquise est déclenchée automatiquement en fonction de la position relative de l'image (IM_SYMB) dudit symbole (SYMB) dans ledit champ d'acquisition et de la position dudit symbole virtuel (SYMB_V).

28. Procédé selon la revendication 27 dans lequel l'étape (E20) d'acquisition de l'image acquise est déclenchée automatiquement lorsque l'image (IM_SYMB) dudit symbole (SYMB) dans ledit champ d'acquisition coïncide avec ledit symbole virtuel (SYMB_V).

29. **Système** (SYS) de génération d'une signature numérique d'une surface d'un élément matériel en matériau fibreux, en cuir ou métallique, dite « surface examinée » (S_1), ledit système (SYS) comportant:

- un module d'obtention (MOD_OBT1) d'une image dite « décalée » (IM_1) représentant ladite surface examinée (S_1) ;
- un module d'obtention (MOD_OBT2) de zones d'intérêt (ZI_1, ZI_2, ZI_3, ZI_4) dans ladite image décalée, chacune desdites zones d'intérêt étant obtenue par une méthode de mise en correspondance, en anglais « Template Matching », de ladite image décalée (IM_1) avec une zone dite équivalente (ZEQ_1, ZEQ_2, ZEQ_3, ZEQ_4) prédéterminée, lesdites zones équivalentes étant comprises dans une image modèle (IM_M) représentant une surface dite « de référence » (S_REF), chacune desdites zones d'intérêt (ZI_1, ZI_2, ZI_3, ZI_4) étant positionnée autour et/ou par rapport à un élément graphique (TAG_1, TAG_2, TAG_3, TAG_4) présent sur ladite surface examinée (S_1), ledit élément graphique (TAG_1, TAG_2, TAG_3, TAG_4) étant également présent sur ladite surface de référence (S_REF) ;
- un module de recalage (MOD_RECAL) de ladite image décalée (IM_1) avec ladite image modèle (IM_M), ledit recalage étant effectué en appliquant une première homographie (H1) à ladite image décalée (IM_1), ladite homographie (H1) étant estimée à partir d'une zone de recherche comprenant les zones d'intérêt et à partir des coordonnées de couples de points, un dit couple de points étant obtenu pour chacune desdites zones d'intérêt, chaque couple de points comportant un point prédéterminé d'une dite zone d'intérêt (ZI_1, ZI_2, ZI_3, ZI_4) et un point prédéterminé correspondant de ladite zone équivalente (ZEQ_1, ZEQ_2, ZEQ_3, ZEQ_4) ; et
- un module de génération (MOD_GEN) de ladite signature numérique à partir de ladite image recalée (IM_2), ladite signature numérique caractérisant la structure de ladite surface examinée (S_1).

30. Système (SYS) selon la revendication 29, ledit système (SYS) comportant :

- un premier module (T1) comportant une première caméra (CAM_1) et une première source lumineuse (LUM_1) formant un angle d'attaque ($\alpha$) par rapport à ladite surface de référence (S_REF) correspondant à une incidence rasante, ledit angle d'attaque ($\alpha$) étant de préférence compris entre 16° et 45°, encore de préférence compris entre 16° et 25°, encore de préférence compris entre 16° et 20° ; et/ou
- un deuxième module comportant un terminal communicant (T2), une deuxième caméra (CAM_2) et une deuxième source lumineuse (LUM_2).

31. Système (SYS) selon la revendication 30, dans lequel ledit terminal communicant (T2) constitue un téléphone portable ou une tablette, dans lequel ladite deuxième caméra (CAM_1) constitue une caméra dudit téléphone portable ou de ladite tablette, et dans lequel ladite deuxième source lumineuse (LUM_2) constitue un flash dudit téléphone portable ou de ladite tablette.

32. Programme d'ordinateur (PG) comportant des instructions pour l'exécution des étapes d'un procédé de génération d'au moins une signature numérique selon l'une quelconque des revendications 1 à 28 lorsque ces instructions sont exécutées par un ordinateur.

33. Support d'enregistrement (SUP) lisible par un ordinateur sur lequel est enregistré un programme d'ordinateur comprenant les instructions pour l'exécution desdites étapes d'un procédé de génération d'au moins une signature numérique selon l'une quelconque des revendications 1 à 28.

**Patentansprüche**

1. Verfahren zur Erzeugung einer digitalen Signatur einer Oberfläche eines materiellen Elements aus faserigem Material, aus Leder oder aus Metall, bezeichnet als "untersuchte Oberfläche" (S_1), wobei das Verfahren durch ein Datenverarbeitungssystem umgesetzt wird, wobei das Verfahren für die untersuchte Oberfläche (S_1) aufweist:

- einen Schritt (E30) zum Erhalten eines als "versetzt" bezeichneten Bildes (IM_1), das die untersuchte Oberfläche (S_1) darstellt;

einen Schritt (E50) zum Erhalten von interessierenden Bereichen (ZI_1, ZI_2, ZI_3, ZI_4) in dem versetzten Bild (IM_1), wobei jeder der interessierenden Bereiche durch ein Zuordnungsverfahren, auf Englisch "Template Matching", eines interessierenden Bereichs des versetzten Bildes (IM_1) zu einem vorbestimmten äquivalenten Bereich (ZEQ_1, ZEQ_2, ZEQ_3, ZEQ_4) erhalten wird, wobei die äquivalenten Bereiche in einem Modellbild (IM_M) enthalten sind, das eine "Referenz"-Oberfläche (S_REF) darstellt, wobei jeder der interessierenden Bereiche (ZI_1, ZI_2, ZI_3, ZI_4) um ein grafisches Element (TAG_1, TAG_2, TAG_3, TAG_4) herum und/oder relativ zu diesem positioniert ist, das auf der untersuchten Oberfläche (S_1) vorhanden ist, wobei das grafische Element (TAG_1, TAG_2, TAG_3, TAG_4) ebenfalls auf der Referenzoberfläche (S_REF) vorhanden ist;
einen Schritt (E70) zum Erhalten eines als "registriert" bezeichneten Bildes (IM_2) durch Registrierung des versetzten Bildes (IM_1) mit dem Modellbild (IM_M), wobei die Registrierung durch Anwenden einer ersten Homographie (H1) auf das versetzte Bild (IM_1) durchgeführt wird, wobei die erste Homographie (H1) ausgehend von einem Suchbereich, der die interessierenden Bereiche umfasst, und ausgehend von den Koordinaten von Punktpaaren geschätzt wird, wobei ein Punktpaar für jeden der interessierenden Bereiche erhalten wird, wobei jedes Punktpaar einen vorbestimmten Punkt eines interessierenden Bereichs (ZI_1, ZI_2, ZI_3, ZI_4) und einen vorbestimmten Punkt aufweist, der dem äquivalenten Bereich (ZEQ_1, ZEQ_2, ZEQ_3, ZEQ_4) entspricht; und

- einen Schritt (E90) zum Erzeugen der digitalen Signatur ausgehend von dem registrierten Bild (IM_2), wobei die digitale Signatur die Struktur der untersuchten Oberfläche (S_1) charakterisiert.

2. Verfahren nach Anspruch 1, wobei der Schritt (E30) zum Erhalten des versetzten Bildes einen Schritt (E20) zum Erfassen eines als "erfasst" bezeichneten Bildes (IM_0) durch ein erstes Erfassungsmodul (CAM_1) aufweist, wobei das versetzte Bild (IM_1) ausgehend von dem erfassten Bild (IM_0) erhalten wird.

3. Verfahren nach Anspruch 2, wobei das versetzte Bild (IM_1) dem erfassten Bild (IM_0) entspricht und wobei die Signatur in dem Erzeugungsschritt (E90) durch Analyse des registrierten Bildes (IM_2) erzeugt wird.

4. Verfahren nach Anspruch 2, das einen vorhergehenden Schritt (E10) zum Erfassen eines als "orientiert" bezeichneten Bildes (IM_M') der Referenzoberfläche (S_REF) mit einem zweiten Erfassungsmodul (CAM_2) aufweist, das im Wesentlichen gemäß der Normalen zu der Referenzoberfläche (S_REF) positioniert ist, wobei das Modellbild (IM_M) durch Anwenden einer vorbestimmten zweiten Homographie (H2) auf das orientierte Bild (IM_M') erhalten wird.

5. Verfahren nach Anspruch 4, das einen Schritt (E80) zum Erhalten eines als "transformiert" bezeichneten Bildes (IM_2') durch Transformation des registrierten Bildes (IM_2) durch Anwendung der Inversen (H2') der zweiten Homographie (H2) darauf aufweist, und wobei die Signatur in dem Erzeugungsschritt (E90) durch Analyse des transformierten Bildes (IM_2') erzeugt wird.

6. Verfahren nach Anspruch 4, wobei das registrierte Bild (IM_2) durch Anwendung der inversen Homographie (H2') der zweiten Homographie (H2) auf das erfasste Bild (IM_0) erhalten wird, und wobei die Signatur in dem Erzeugungsschritt (E90) durch Analyse des registrierten Bildes (IM_2) erzeugt wird.

7. Verfahren nach einem der Ansprüche 1 bis 6, das für jede untersuchte Oberfläche (S_1) einen Schritt (E120) zur Authentifizierung der untersuchten Oberfläche (S_1) aufweist, wobei der Authentifizierungsschritt durch Vergleich der erzeugten Signatur mit einer authentischen digitalen Signatur durchgeführt wird, wobei die authentische Signatur die Struktur der Referenzoberfläche (S_REF) charakterisiert.

8. Verfahren nach Anspruch 7, das einen vorhergehenden Schritt aufweist:

    - zum Erzeugen (E5) der authentischen Signatur ausgehend von dem Modellbild (IM_M), bezeichnet als Erzeugung erster Art, wenn die Signatur während des Erzeugungsschritts (E90) nach einem der Ansprüche 3 bis 5 erzeugt wird; oder
    - zum Erzeugen (E5') der authentischen Signatur ausgehend von dem orientierten Bild (IM_M'), bezeichnet als Erzeugung zweiter Art, wenn die Signatur während des Erzeugungsschritts (E90) nach Anspruch 6 oder 7 erzeugt wird.

9. Verfahren nach Anspruch 8, wobei der Schritt zum Erzeugen (E5, E5') der authentischen Signatur aufweist:

    - einen Schritt (F200) zum Erfassen der Referenzoberfläche (S_REF) durch ein drittes Erfassungsmodul (CAM_3); und
    - einen Schritt (F400) zum Beleuchten der Referenzoberfläche (S_REF) mit einer ersten Lichtquelle (LUM_1) zumindest während des Erfassungsschritts (F200),

    wobei der Erfassungsschritt (F200) entspricht:

    - einer Erfassung des Modellbildes (IM_M), wenn die Erzeugung von der ersten Art ist; oder
    - einer Erfassung des orientierten Bildes (IM_M'), wenn die Erzeugung von der zweiten Art ist.

10. Verfahren nach Anspruch 9, wobei die optische Achse (OX) des dritten Moduls (CAM_3) im Wesentlichen gemäß der Normalen zu der Referenzoberfläche (S_REF) orientiert ist, und wobei die Referenzoberfläche (S_REF) während des Beleuchtungsschritts (F400) durch die erste Quelle (LUM_1) mit einem Angriffswinkel ($\alpha$) relativ zu der Referenzoberfläche beleuchtet wird, der einem streifenden Einfall entspricht.

11. Verfahren nach Anspruch 10, wobei der Angriffswinkel ($\alpha$) vorzugsweise zwischen 16° und 45° liegt.

12. Verfahren nach einem der Ansprüche 2 bis 11, das einen Schritt (E15) zum Beleuchten der untersuchten Oberfläche (S_1) durch eine zweite Lichtquelle (LUM_2) zumindest während des durch das erste Modul (CAM_1) durchgeführten Erfassungsschritts (E20) aufweist, und wobei der Schritt zum Erzeugen der Signatur (E90) einen Schritt (E95) zum Erhalten eines Strukturmerkmals der untersuchten Oberfläche (S_1) durch Detektion der Wechselwirkung der untersuchten Oberfläche (S_1) mit der zweiten Lichtquelle (LUM_2) aufweist, wobei die Detektion der Wechselwirkung durchgeführt wird:

- durch Analysieren des registrierten Bildes (IM_2), wenn die Erzeugung von der ersten Art ist; oder
- durch Analysieren des transformierten Bildes (IM_2'), das ausgehend von dem registrierten Bild erhalten wird, wenn die Erzeugung von der zweiten Art ist.

13. Verfahren nach einem der Ansprüche 7 bis 12, das einen vorhergehenden Schritt zum Erzeugen der authentischen Signatur, bezeichnet als Erzeugung dritter Art, aufweist, wobei der Schritt zum Erzeugen dritter Art aufweist:

- einen Schritt zum Erfassen des Modellbildes (IM_M) durch ein Erfassungsmodul;
- einen Schritt zum Beleuchten der Referenzoberfläche (S_REF) mit einer Lichtquelle zumindest während des Erfassungsschritts, wobei die optische Achse des Moduls und die Quelle im Wesentlichen dieselbe Orientierung relativ zu der Referenzoberfläche (S_REF) aufweisen, beispielsweise denselben Neigungswinkel $\beta$; und
- einen Schritt zum Analysieren eines als "reorientiert" bezeichneten Bildes, wobei das reorientierte Bild durch Anwendung einer Homographie erhalten wird, die die Orientierung des Erfassungsmoduls und der Lichtquelle kompensiert, beispielsweise eine erste Rotation um einen Winkel -$\beta$ auf das Modellbild (IM_M);
wobei das versetzte Bild (IM_1) dem erfassten Bild (IM_0) entspricht,
wobei das Verfahren einen Schritt zum Beleuchten der untersuchten Oberfläche (S_1) mit einer Lichtquelle zumindest während des durch das erste Modul (CAM_1) durchgeführten Erfassungsschritts (E20) aufweist, und wobei der Schritt zum Erzeugen der Signatur (E90) einen Schritt zum Erhalten eines Strukturmerkmals der untersuchten Oberfläche (S_1) durch Detektion der Wechselwirkung der untersuchten Oberfläche (S_1) mit der Lichtquelle aufweist, wobei die optische Achse des Moduls und die Lichtquelle im Wesentlichen dieselbe Orientierung relativ zu der untersuchten Oberfläche (S_1) aufweisen, beispielsweise denselben Neigungswinkel $\beta$,
wobei die Detektion der Wechselwirkung durch Analyse eines als "abgeflachtes Bild" bezeichneten Bildes durchgeführt wird, wobei das abgeflachte Bild durch eine Homographie erhalten wird, die die Orientierung des Erfassungsmoduls und der Lichtquelle kompensiert, beispielsweise eine erste Rotation um einen Winkel -$\beta$ auf das registrierte Bild (IM_2).

14. Verfahren nach Anspruch 12, wobei für die Erfassung von mindestens zwei Bildern durch das erste Modul (CAM_1) für jedes der erfassten Bilder die zweite Quelle (LUM_2) an derselben relativen Position und in derselben relativen Orientierung relativ zu dem ersten Modul (CAM_1) lokalisiert ist.

15. Verfahren nach einem der Ansprüche 1 bis 14, das einen Schritt zum Lesen geschützter Informationen (E130) aufweist, wobei die geschützten Informationen in digitaler Form einer inversen digitalen Verarbeitung einer zu ihrem Schutz verwendeten Verarbeitung unterzogen werden, wobei die Verarbeitung die erzeugte Signatur verwendet.

16. Verfahren nach Anspruch 15, wobei die geschützten Informationen in einem visuellen Code (CODE) enthalten sind, der auf der untersuchten Oberfläche (S_1) oder auf einem Produkt oder einer Verpackung angeordnet ist, das/die die untersuchte Oberfläche (S_1) umfasst.

17. Verfahren nach Anspruch 16, wobei der visuelle Code (CODE) einem eindimensionalen oder zweidimensionalen Strichcode entspricht.

18. Verfahren nach Anspruch 1, wobei das Zuordnungsverfahren ausgehend von dem Suchbereich eine erste Schätzung der Parameter einer affinen Abbildung erhält, die vorbestimmte Punkte der interessierenden Bereiche (ZI_1) in entsprechende vorbestimmte Punkte der äquivalenten Bereiche (ZEQ_1) transformiert.

19. Verfahren nach Anspruch 18, wobei die erste Schätzung unter Verwendung eines Verfahrens der kleinsten Quadrate zwischen den Koordinaten der Punkte der äquivalenten Bereiche (ZEQ_1) und den Koordinaten der Punkte des Suchbereichs erhalten wird.

20. Verfahren nach Anspruch 18, wobei die erste Schätzung unter Verwendung eines Interkorrelationsverfahrens zwischen den Koordinaten der Punkte der äquivalenten Bereiche (ZEQ_1) und den Koordinaten der Punkte des Suchbereichs erhalten wird.

21. Verfahren nach einem der Ansprüche 18 bis 20, wobei das Zuordnungsverfahren einen Schritt (E75) zum Erhalten einer zweiten Schätzung der Parameter aufweist, wobei die zweite Schätzung durch Optimierung der ersten Schätzung mit einem iterativen Algorithmus erhalten wird, der darauf abzielt, einen ersten verbesserten Korrelationskoeffizienten zwischen dem äquivalenten Bereich (ZEQ_1) und dem Suchbereich zu maximieren.

22. Verfahren nach einem der Ansprüche 1 bis 21, wobei die Referenzoberfläche eine Oberfläche bildet, deren Neigung und Position relativ zu der Erfassungsebene des Modellbildes bekannt sind.

23. Verfahren nach einem der Ansprüche 1 bis 22, wobei das Erhalten der ersten Homographie (H1) die Verwendung eines "RANSAC"-Algorithmus (RAndom SAmple Consensus) aufweist.

24. Verfahren nach einem der Ansprüche 1 bis 23, wobei das Erhalten der Homographie (H1) die Verwendung eines iterativen Optimierungsalgorithmus aufweist, der darauf abzielt, einen zweiten verbesserten Korrelationskoeffizienten zwischen dem versetzten Bild (IM_1) und dem Modellbild (IM_M) zu maximieren.

25. Verfahren nach einem der Ansprüche 1 bis 24, das einen vorhergehenden Schritt (E35) zum Definieren der äquivalenten Bereiche (ZEQ_1, ZEQ_2, ZEQ_3, ZEQ_4) in dem Modellbild (IM_M) aufweist.

26. Verfahren nach einem der Ansprüche 2 bis 25, wobei die untersuchte Oberfläche (S_1) ein Symbol (SYMB) aufweist, wobei der Schritt (E20) zum Erfassen des erfassten Bildes automatisch in Abhängigkeit von der Bestimmung einer Orientierung des ersten Erfassungsmoduls (CAM_1) relativ zu der untersuchten Oberfläche ausgelöst wird, wobei die Bestimmung ausgehend von einem Bild (IM_SYMB) des Symbols (SYMB) durchgeführt wird.

27. Verfahren nach Anspruch 26, wobei das Verfahren einen Schritt zum Anzeigen auf einem Bildschirm eines Endgeräts, das das erste Erfassungsmodul (CAM_1) aufweist, eines Bildes des Erfassungsfeldes des ersten Erfassungsmoduls (CAM_1) aufweist, in welchem ein virtuelles Symbol (SYMB_V) überlagert ist, und wobei der Schritt (E20) zum Erfassen des erfassten Bildes automatisch in Abhängigkeit von der relativen Position des Bildes (IM_SYMB) des Symbols (SYMB) in dem Erfassungsfeld und von der Position des virtuellen Symbols (SYMB_V) ausgelöst wird.

28. Verfahren nach Anspruch 27, wobei der Schritt (E20) zum Erfassen des erfassten Bildes automatisch ausgelöst wird, wenn das Bild (IM_SYMB) des Symbols (SYMB) in dem Erfassungsfeld mit dem virtuellen Symbol (SYMB_V) zusammenfällt.

29. System (SYS) zur Erzeugung einer digitalen Signatur einer Oberfläche eines materiellen Elements aus faserigem Material, aus Leder oder aus Metall, bezeichnet als "untersuchte Oberfläche" (S_1), wobei das System (SYS) aufweist:

- ein Modul zum Erhalten (MOD_OBT1) eines als "versetzt" bezeichneten Bildes (IM_1), das die untersuchte Oberfläche (S_1) darstellt;
- ein Modul zum Erhalten (MOD_OBT2) von interessierenden Bereichen (ZI_1, ZI_2, ZI_3, ZI_4) in dem versetzten Bild, wobei jeder der interessierenden Bereiche durch ein Zuordnungsverfahren, auf Englisch "Template Matching", des versetzten Bildes (IM_1) mit einem vorbestimmten sogenannten äquivalenten Bereich (ZEQ_1, ZEQ_2, ZEQ_3, ZEQ-4) erhalten wird, wobei die äquivalenten Bereiche in einem Modellbild (IM_M) umfasst sind, das eine "Referenz"-Oberfläche (S_REF) darstellt, wobei jeder der interessierenden Bereiche (ZI_1, ZI_2, ZI_3, ZI_4) um ein grafisches Element (TAG_1, TAG_2, TAG_3, TAG_4) herum und/oder relativ zu diesem positioniert ist, das auf der untersuchten Oberfläche (S_1) vorhanden ist, wobei das grafische Element (TAG_1, TAG_2, TAG_3, TAG_4) ebenfalls auf der Referenzoberfläche (S_REF) vorhanden ist;
- ein Modul zum Registrieren (MOD_RECAL) des versetzten Bildes (IM_1) mit dem Modellbild (IM_M), wobei die Registrierung durch Anwenden einer ersten Homographie (H1) auf das versetzte Bild (IM_1) durchgeführt wird, wobei die Homographie (H1) ausgehend von einem Suchbereich, der die interessierenden Bereiche umfasst, und ausgehend von den Koordinaten von Punktpaaren geschätzt wird, wobei ein Punktpaar für jeden der interessierenden Bereiche erhalten wird, wobei jedes Punktpaar einen vorbestimmten Punkt eines betreffenden interessierenden Bereichs (ZI_1, ZI_2, ZI_3, ZI_4) und einen entsprechenden vorbestimmten Punkt des äquivalenten Bereichs (ZEQ_1, ZEQ_1, ZEQ_3, ZEQ_4) aufweist; und
- ein Modul zum Erzeugen (MOD_GEN) der digitalen Signatur ausgehend von dem registrierten Bild (IM_2), wobei die digitale Signatur die Struktur der untersuchten Oberfläche (S_1) charakterisiert.

30. System (SYS) nach Anspruch 29, wobei das System (SYS) aufweist:

    - ein erstes Modul (T1), das eine erste Kamera (CAM_1) und eine erste Lichtquelle (LUM_1) aufweist, die einen Angriffswinkel ($\alpha$) relativ zu der Referenzoberfläche (S_REF) bildet, der einem streifenden Einfall entspricht, wobei der Angriffswinkel ($\alpha$) vorzugsweise zwischen 16° und 45°, weiter vorzugsweise zwischen 16° und 25°, noch weiter vorzugsweise zwischen 16° und 20° liegt; und/oder
    - ein zweites Modul, das ein kommunizierendes Endgerät (T2), eine zweite Kamera (CAM_2) und eine zweite Lichtquelle (LUM_2) aufweist.

31. System (SYS) nach Anspruch 30, wobei das kommunizierende Endgerät (T2) ein Mobiltelefon oder ein Tablet bildet, wobei die zweite Kamera (CAM_1) eine Kamera des Mobiltelefons oder des Tablets bildet, und wobei die zweite Lichtquelle (LUM_2) einen Blitz des Mobiltelefons oder des Tablets bildet.

32. Computerprogramm (PG), das Anweisungen zur Ausführung der Schritte eines Verfahrens zur Erzeugung mindestens einer digitalen Signatur nach einem der Ansprüche 1 bis 28 aufweist, wenn diese Anweisungen durch einen Computer ausgeführt werden.

33. Computerlesbarer Aufzeichnungsträger (SUP), auf dem ein Computerprogramm gespeichert ist, das die Anweisungen zur Ausführung der Schritte eines Verfahrens zur Erzeugung mindestens einer digitalen Signatur nach einem der Ansprüche 1 bis 28 umfasst.

**Claims**

1. A method for generating a digital signature of a surface of a physical item made of a fibrous material, leather, or metal, referred to as the "examined surface" (S_1), said method being implemented by a data processing system, said method including, for said examined surface (S_1)

    - a step (E30) of obtaining an image (IM_1) referred to as a "shifted" image representing said examined surface (S_1);

       a step (E50) of obtaining zones of interest (ZI_1, ZI_2, ZI_3, ZI_4) in said shifted image (IM_1), each of said zones of interest being obtained by a Template Matching of a zone of interest of said shifted image (IM_1) with a so-called predetermined equivalent zone (ZEQ_1, ZEQ_2, ZEQ_3, ZEQ_4), said equivalent zones being included in a model image (IM_M) representing a so-called "reference" surface (S_REF), each of said zones of interest (ZI_1, ZI_2, ZI_3, ZI_4) being positioned around and/or relative to a graphic element (TAG_1, TAG_2, TAG_3, TAG_4) present on said examined surface (S_1), said graphic element (TAG_1, TAG_2, TAG_3, TAG_4) also being present on said reference surface (S_REF);
       a step (E70) of obtaining a so-called "registered" image (IM_2) by registration of said shifted image (IM_1) with said model image (IM_M), said registration being performed by applying a first homography (H1) to said shifted image (IM_1), said first homography (H1) being estimated from a search zone comprising the zones of interest and from the coordinates of pairs of points, one said pair of points being obtained for each of said zones of interest, each pair of points including a predetermined point of one said zone of interest (ZI_1, ZI_2, ZI_3, ZI_4) and a corresponding predetermined point of said equivalent zone (ZEQ_1, ZEQ_2, ZEQ_3, ZEQ_4); and

    - a step (E90) of generating said digital signature from said registered image (IM_2), said digital signature characterizing the structure of said examined surface (S_1).

2. The method according to claim 1, wherein said step (E30) of obtaining said shifted image includes a step (E20) of acquiring a so-called "acquired" image (IM_0) by a first acquisition module (CAM_1), said shifted image (IM_1) being obtained from said acquired image (IM_0).

3. The method according to claim 2, wherein said shifted image (IM_1) corresponds to said acquired image (IM_0) and wherein said signature is generated in said generation step (E90) by analysis of said registered image (IM_2).

**4.** The method according to claim 2, including a preliminary step (E10) of acquiring a so-called "oriented" image (IM_M') of said reference surface (S_REF) with a second acquisition module (CAM_2) positioned substantially according to the normal to said reference surface (S_REF), wherein said model image (IM_M) is obtained by applying a predetermined second homography (H2) to said oriented image (IM_M').

**5.** The method according to claim 4, including a step (E80) of obtaining a so-called "transformed" image (IM_2') by transforming said registered image (IM_2) by applying thereto the inverse (H2') of said second homography (H2), and wherein said signature is generated in said generation step (E90) by analysis of said transformed image (IM_2').

**6.** The method according to claim 4, wherein said registered image (IM_2) is obtained by application of said inverse homography (H2') of said second homography (H2) to said acquired image (IM_0), and wherein said signature is generated in said generation step (E90) by analysis of said registered image (IM_2).

**7.** The method according to any one of claims 1 to 6, including, for each said examined surface (S_1), a step (E120) of authenticating said examined surface (S_1), said authentication step being performed by comparison of said generated signature with an authentic digital signature, said authentic signature characterizing the structure of said reference surface (S_REF).

**8.** The method according to claim 7, including a preliminary step

- of generating (E5) said authentic signature from said model image (IM_M), so-called first type generation, when said signature is generated during said generation step (E90) in accordance with any one of claims 3 to 5; or
- of generating (E5') said authentic signature from said oriented image (IM_M'), so-called second type generation, when said signature is generated during said generation step (E90) in accordance with claim 6 or 7.

**9.** The method according to claim 8, wherein said step (E5, E5') of generating said authentic signature includes:

- a step (F200) of acquiring, by a third acquisition module (CAM_3), said reference surface (S_REF); and
- a step (F400) of illuminating, during at least said acquisition step (F200) of said reference surface (S_REF) with a first light source (LUM_1),

said acquisition step (F200) corresponding to:

- an acquisition of said model image (IM_M) if said generation is of said first type; or to
- an acquisition of said oriented image (IM_M') if said generation is of said second type.

**10.** The method according to claim 9, wherein the optical axis (OX) of said third module (CAM_3) is oriented substantially according to the normal to said reference surface (S_REF), and wherein said reference surface (S_REF) is illuminated during said illumination step (F400) by said first source (LUM_1) with an angle of incidence ($\alpha$) relative to said reference surface corresponding to grazing incidence.

**11.** The method according to claim 10, wherein said angle of incidence ($\alpha$) is preferably between 16° and 45°.

**12.** The method according to any one of claims 2 to 11, including an illumination step (E15), at least during said acquisition step (E20) performed by said first module (CAM_1), of said examined surface (S_1) by a second light source (LUM_2), and wherein said step of generating said signature (E90) includes a step (E95) of obtaining a structural characteristic of said examined surface (S_1) by detecting the interaction of said examined surface (S_1) with said second light source (LUM_2), said detection of the interaction being performed

- by analyzing said registered image (IM_2) if said generation is of said first type; or
- by analyzing said transformed image (IM_2') obtained from said registered image, if said generation is of said second type.

**13.** The method according to any one of claims 7 to 12 including a preliminary step of generating said authentic signature, so-called third type generation, said third type generation step including:

- an acquisition step, by an acquisition module, said model image (IM_M);
- a step of illuminating, during at least said acquisition step of said reference surface (S_REF) with a light source, the optical axis of said module and said source having substantially the same orientation relative to the reference surface (S_REF), for example the same angle of inclination β; and
- a step of analyzing a so-called "reoriented" image, said reoriented image being obtained by application of a homography compensating for the orientation of the acquisition module and of the light source, for example a first rotation through an angle -β to said model image (IM_M);
wherein said shifted image (IM_1) corresponds to said acquired image (IM_0),
said method including an illumination step, at least during said acquisition step (E20) performed by said first module (CAM_1), of said examined surface (S_1) by a light source, and wherein said step of generating said signature (E90) includes a step of obtaining a structural characteristic of said examined surface (S_1) by detection of the interaction of said examined surface (S_1) with said light source, the optical axis of said module and said source being oriented substantially having substantially the same orientation relative to said examined surface (S_1), for example the same angle of inclination β,
said detection of the interaction being performed by analysis of a so-called "flattened image", said flattened image being obtained from a homography compensating for the orientation of the acquisition module and of the light source, for example a first rotation through an angle -β to said registered image (IM_2).

14. The method according to claim 12, wherein for the acquisition of at least two images by said first module (CAM_1), for each of said acquired images, said second source (LUM_2) is located at the same relative position and in the same relative orientation relative to said first module (CAM_1).

15. The method according to any one of claims 1 to 14, including a step of reading protected information (E130), said protected information being subjected in digital form to a digital processing inverse to a processing used for its protection, said processing using said generated signature.

16. The method according to claim 15, wherein said protected information is contained in a visual code (CODE) arranged on said examined surface (S_1) or on a product or packaging comprising said examined surface (S_1).

17. The method according to claim 16, wherein said visual code (CODE) corresponds to a one-dimensional or two-dimensional bar code.

18. The method according to claim 1, wherein said matching method obtains, from said search zone, a first estimate of the parameters of an affine application transforming predetermined points of said zones of interest (ZI_1) into corresponding predetermined points of said equivalent zones (ZEQ _1).

19. The method according to claim 18, wherein said first estimate is obtained using a least-squares method between the coordinates of said points of said equivalent zones (ZEQ _1) and the coordinates of said points of said search zone.

20. The method according to claim 18, wherein said first estimation is obtained using an intercorrelation method between the coordinates of said points of said equivalent zones (ZEQ_1) and the coordinates of said points of said search zone.

21. The method according to any one of claims 18 to 20, wherein said matching method includes an obtention step (E75) of a second estimate of said parameters, said second estimation being obtained by optimization of said first estimation with an iterative algorithm aimed at maximizing a first improved correlation coefficient between said equivalent zone (ZEQ_1) and said search zone.

22. The method according to any one of claims 1 to 21, wherein said reference surface constitutes a surface, the inclination and position of which, relative to the acquisition plane of said model image are known.

23. The method according to any one of claims 1 to 22, wherein said obtaining of said first homography (H1) includes the use of a so-called "RANSAC" (RAndom SAmple Consensus) algorithm.

24. The method according to any one of claims 1 to 23, wherein said obtaining of said homography (H1) includes the use of an iterative optimization algorithm aimed at maximizing a second improved correlation coefficient between said shifted image (IM_1) and said model image (IM_M).

25. The method according to any one of claims 1 to 24, including a preliminary step (E35) of defining said equivalent zones (ZEQ_1, ZEQ_2, ZEQ3, ZEQ_4) in said model image (IM_M).

**26.** The method according to any one of claims 2 to 25, wherein said examined surface (S_1) includes a symbol (SYMB), the acquisition step (E20) of acquiring the image being triggered automatically as a function of the determination of an orientation of said first acquisition module (CAM_1) relative to the examined surface, said determination being performed from an image (IM_SYMB) of said symbol (SYMB).

**27.** The method according to claim 26, said method including a step of displaying, on a screen of a terminal including said first acquisition module (CAM_1), an image of the acquisition field of said first module (CAM_1), wherein a virtual symbol (SYMB_V) is superposed, and wherein the acquisition step (E20) of acquiring the image is triggered automatically as a function of the relative position of the image (IM_SYMB) of said symbol (SYMB) in said acquisition field and of the position of said virtual symbol (SYMB_V).

**28.** The method according to claim 27 wherein the acquisition step (E20) of acquiring the image is triggered automatically when the image (IM_SYMB) of said symbol (SYMB) in said acquisition field coincides with said virtual symbol (SYMB_V).

**29.** A system (SYS) for generating a digital signature of a surface of a physical item made of a fibrous material, leather, or metal, so-called "examined surface" (S_1), said system (SYS) including:

- a module (MOD_OBT1) for obtaining a so-called <<shifted>> image (IM_1) representing said examined surface (S_1);
- a module (MOD_OBT2) for obtaining zones of interest (ZI_1, ZI_2, ZI_3, ZI_4) in said shifted image, each of said zones of interest being obtained by a Template Matching of said shifted image (IM_1) with a so-called predetermined equivalent zone (ZEQ_1, ZEQ_2, ZEQ_3, ZEQ_4), said equivalent zones being included in a model image (IM_M) representing a so-called "reference" surface (S_REF), each of said zones of interest (ZI_1, ZI_2, ZI_3, ZI_4) being positioned around and/or relative to a graphic element (TAG_1, TAG_2, TAG_3, TAG_4) present on said examined surface (S_1), said graphic element (TAG_1, TAG_2, TAG_3, TAG_4) also being present on said reference surface (S_REF);
- a registration module (MOD_RECAL) for said shifted image (IM_1) with said model image (IM_M), said registration being performed by applying a first homography (H1) to said shifted image (IM_1), said homography (H1) being estimated from a search zone comprising the zones of interest and from the coordinates of pairs of points, one said pair of points being obtained for each of said zones of interest, each pair of points including a predetermined point of one said zone of interest (ZI_1, ZI_2, ZI_3, ZI_4) and a corresponding predetermined point of said equivalent zone (ZEQ_1, ZEQ_2, ZEQ_3, ZEQ_4); and
- a generation module (MODGEN) of said digital signature from said registered image (IM_2), said digital signature characterizing the structure of said examined surface (S_1).

**30.** The system (SYS) according to claim 29, said system (SYS) including:

- a first module (T1) including a first camera (CAM_1) and a first light source (LUM_1) forming an angle of incidence ($\alpha$) relative to said reference surface (S_REF) corresponding to the grazing incidence, said angle of incidence ($\alpha$) preferably being between 16° and 45°, more preferably between 16° and 25°, still more preferably between 16° and 20°; and/or
- a second module including a communicating terminal (T2), a second camera (CAM_2) and a second light source (LUM_2).

**31.** The system (SYS) according to claim 30, wherein said communicating terminal (T2) constitutes a mobile telephone or a tablet, wherein said second camera (CAM_1) constitutes a camera of said mobile telephone or of said tablet, and wherein said second light source (LUM_2) constitutes a flash of said mobile telephone or of said tablet.

**32.** A computer program (PG) including instructions for executing the steps of a method for generating at least one digital signature according to any one of claims 1 to 28 when said instructions are executed by a computer.

**33.** A computer-readable recording medium (SUP) on which a computer program is recorded comprising instructions for executing said steps of a method for generating at least one digital signature according to any one of claims 1 to 28.

FIG.1

FIG.2

EP 3 507 741 B1

**FIG.3**

**FIG.4**

E30 ~ OBT_IM_1

IM_1

E50 ~ GET_Z

E70 ~ RECAL

IM_2

H1

E90 ~ GEN

## FIG.5

E20 ~ | E30

ACQ_IM_0

IM_0

IM_1

E50 ~ GET_Z

H1

E70 ~ RECAL

IM_2

E90 ~ GEN

## FIG.6

E15 ~ ECL_S1

E30

E20 ~ ACQ_IM_0

E50 ~ GET_Z

E70 ~ RECAL

E90 ~ GEN

## FIG.7

E30 ~ OBT_IM_1

E35 ~ DEF_Z

E50 ~ GET_Z

E70 ~ RECAL

E90 ~ GEN

## FIG.8

FIG.9

FIG.10

FIG.11

FIG.12

E5/E5' — GEN_AUTH

E30 — OBT_IM_1

E50 — GET_Z

E70 — RECAL

E90 — GEN

E120 — AUTHEN

## FIG.13

E30 — OBT_IM_1

E50 — GET_Z

E70 — RECAL

E90 — GEN

E130 — LECT

## FIG.14

S_1

TAG_4

ZI_1    ZI_2    REF : 425

IM_1

ZI_4

ZI_3

TAG_1    TAG_2    TAG_3

## FIG.15

S_REF

IM_M

TAG_4

ZEQ_1   ZEQ_2   REF : 425   ZEQ_4

ZEQ_3

TAG_1   TAG_2   TAG_3

FIG.16

IM_0 = IM_1   H1   IM_2   ⟺   IM_M

FIG.17

EP 3 507 741 B1

E10 ⌐ ACQ_IM_M'

IM_M'

IM_M
⌐ H2

E20/E30 ⌐ ACQ_IM_0

IM_0 = IM_1

E50 ⌐ GET_Z

H1

E70 ⌐ RECAL

IM_2

⌐ H2'

E80 ⌐ OBT_IM_2'

IM_2'

E90 ⌐

**FIG.18**

E10 ⌐ ACQ_IM_M'

IM_M'

IM_M
⌐ H2

E20 ⌐ ACQ_IM_0

IM_0

IM_1
⌐ H2'

E50 ⌐ GET_Z

E70 ⌐ RECAL

IM_2

E90 ⌐ GEN

**FIG.19**

FIG.20

FIG.21

FIG.22

FIG.24

FIG.23

SYMB

T2

IM_SYMB

SYMB_V

S_1

FIG.25

E10 — ACQ_IM_M'

IM_M'

E20 — ACQ_IM_0

IM_0

H3'

IM_1

FIG.26

E50 — GET_Z

H1

E70 — RECAL

IM_2

E90 — GEN

## RÉFÉRENCES CITÉES DANS LA DESCRIPTION

### Documents brevets cités dans la description

- EP 1716520 A
- EP 2084886 B1
- EP 1747540 B1
- EP 1971960 B1
- EP 1716520 B1

### Littérature non-brevet citée dans la description

- Sift-based image alignment for contactless palmprint verification. **ZHAO**. Int. Conf. on Biometrics. IEEE, 2017, 1-6
- **CLARKSON**. *Breaking Assumptions: Distinguishing between Seemingly Identical Items using Cheap Sensors*
- **GEORGIOS D. EVANGELIDIS** ; **EMMANOUIL Z. PSARAKIS**. Parametric Image Alignment Using Enhanced Correlation Coefficient Maximization. *IEEE Transactions on patterne analysis and machine intelligence*, October 2008, vol. 30 (10)
- **M.A. FISCHLER** ; **R.C. BOLLES.** Random sample consensus: A paradigm for model fitting with applications to image analysis and automated cartography.. *Communications of the ACM*, 1981, vol. 24 (6), 381-395
- **GEAORGE WOLBERG** ; **SIAVASH ZOKAI**. *Image Registration For Perspective Deformation Recovery*